# EUROPEAN PATENT APPLICATION

(11) **EP 4 109 285 A1**
(43) Date of publication of application: **28.12.2022**
(21) Application number: 22161636.0
(22) Date of filing: 11.03.2022
(51) Int. Cl.: G06F 13/38, G06F 13/42, G05B 19/05

(54) **METHODS AND APPARATUS FOR DETERMINISTIC LOW LATENCY PACKET FORWARDING FOR DAISY CHAINING OF NETWORK DEVICES**

(30) Priority: 24.06.2021 US 202117357682
(71) Applicant: INTEL Corporation, Santa Clara, CA 95054 (US)
(72) Inventor: KASICHAINULA, Kishore, Phoenix, 85023 (US)
(74) Representative: Maiwald GmbH

(57) **Abstract**

Methods, apparatus, systems, and articles of manufacture are disclosed for deterministic low latency packet forwarding for daisy chaining of network devices. An example apparatus includes fabric circuitry, first data interface circuitry and second data interface circuitry coupled to the fabric circuitry, the first data interface circuitry to, in response to a receipt of a data packet, identify the data packet to be transmitted to third data interface circuitry, a data forwarding buffer, and packet forwarding engine circuitry coupled to the data forwarding buffer and the fabric circuitry, the packet forwarding engine circuitry to store the data packet in the data forwarding buffer, and instruct the second data interface circuitry to transmit the data packet from the data forwarding buffer to the third data interface circuitry.

## Description

### FIELD OF THE DISCLOSURE

This disclosure relates generally to computer networks and, more particularly, to methods and apparatus for deterministic low latency packet forwarding for daisy chaining of network devices.

### BACKGROUND

Industrial communication protocols may be associated with input/output (I/O) devices (e.g., actuators, motor drives, etc.) interconnected in a daisy chain configuration to a controller (e.g., a programmable logic controller (PLC)) using proprietary field buses. In some instances, such proprietary field buses may be replaced with Ethernet Category 5 (Cat5) or Ethernet Category 6 (Cat6) interconnections in response to the advent of IEEE standards for deterministic networking referred to collectively as Time Sensitive Networking (TSN).

### BRIEF DESCRIPTION OF THE DRAWINGS

FIG. 1 is an illustration of an example computing system including example network interface circuitry to facilitate low latency data communication.
FIG. 2 is a first example system including an example controller in communication with example input/output (I/O) devices in an example daisy-chain configuration to facilitate data communication.
FIG. 3 is a second example system including an example host application, example switches, and example I/O devices in an example daisy-chain configuration to facilitate data communication.
FIG. 4 is a third example system including example virtual machines, an example virtual switch, and example network interface circuitry to facilitate data communication.
FIG. 5 is a fourth example system including first example network interface circuitry and second example network interface circuitry to facilitate data communication.
FIG. 6 is an illustration of example hardware, software, and/or firmware layers in a fifth example system.
FIG. 7 is a block diagram of an example implementation of the network interface circuitry of FIG. 1.
FIG. 8 is an example workflow corresponding to example operation of the example network interface circuitry of FIGS. 1 and/or 7.
FIG. 9 is a flowchart representative of example machine readable instructions that may be executed by example processor circuitry to implement the example network interface circuitry of FIGS. 1 and/or 7 to implement packet forwarding for daisy chaining of network devices.
FIG. 10 is a flowchart representative of example machine readable instructions that may be executed by example processor circuitry to implement the example network interface circuitry of FIGS. 1 and/or 7 to store a data packet in a data forwarding buffer.
FIG. 11 is a flowchart representative of example machine readable instructions that may be executed by example processor circuitry to implement the example network interface circuitry of FIGS. 1 and/or 7 to transmit a data packet from a data forwarding buffer.
FIG. 12 is a block diagram of an example processing platform including processor circuitry structured to execute the example machine readable instructions of FIGS. 9-11 to implement the example network interface circuitry of FIGS. 1 and/or 7.
FIG. 13 is a block diagram of an example implementation of the processor circuitry of FIG. 12.
FIG. 14 is a block diagram of another example implementation of the processor circuitry of FIG. 12.
FIG. 15 is a block diagram of an example software distribution platform (e.g., one or more servers) to distribute software (e.g., software corresponding to the example machine readable instructions and/or operations of FIGS. 9-11) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

The figures are not to scale. In general, the same reference numbers will be used throughout the drawing(s) and accompanying written description to refer to the same or like parts.

### DETAILED DESCRIPTION

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name. As used herein "substantially real time" refers to occurrence in a near instantaneous manner recognizing there may be real world delays for computing time, transmission, etc. Thus, unless otherwise specified, "substantially real time" refers to real time +/-1 second. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events. As used herein, "processor circuitry" is defined to include (i) one or more special purpose electrical circuits structured to perform specific operation(s) and including one or more semiconductor-based logic devices (e.g., electrical hardware implemented by one or more transistors), and/or (ii) one or more general purpose semiconductor-based electrical circuits programmed with instructions to perform specific operations and including one or more semiconductor-based logic devices (e.g., electrical hardware implemented by one or more transistors). Examples of processor circuitry include programmed microprocessors, Field Programmable Gate Arrays (FPGAs) that may instantiate instructions, Central Processor Units (CPUs), Graphics Processor Units (GPUs), Digital Signal Processors (DSPs), XPUs, or microcontrollers and integrated circuits such as Application Specific Integrated Circuits (ASICs). For example, an XPU may be implemented by a heterogeneous computing system including multiple types of processor circuitry (e.g., one or more FPGAs, one or more CPUs, one or more GPUs, one or more DSPs, etc., and/or a combination thereof) and application programming interface(s) (API(s)) that may assign computing task(s) to whichever one(s) of the multiple types of the processing circuitry is/are best suited to execute the computing task(s).

Some computer networks in commercial and/or industrial environments may be implemented utilizing industrial communication protocols. The industrial communication protocols may effectuate communication between input/output (I/O) devices (e.g., actuators, motor drives, etc.) in the commercial and/or industrial environments. For example, the I/O devices may be communicatively coupled to one(s) of each other and a controller (e.g., a programmable logic controller (PLC)) in a daisy chain configuration (e.g., a daisy chain topology, a daisy chain network topology, etc.) using proprietary field buses. With the advent of IEEE standards for deterministic networking referred to collectively as Time Sensitive Networking (TSN), the proprietary field buses may be replaced with Ethernet Category 5 (Cat5) or Ethernet Category 6 (Cat6) interconnections.

The daisy chain topology has advantages of simplicity, scalability, and cost savings due to reduced wiring. The daisy chain topology imposes relatively extreme stringent requirements on packet forwarding as the packet forwarding latency dictates minimum cycle time. The minimum cycle time may correspond to a communication time required by a controller to collect and update data from actuator(s), sensor(s), etc. In some examples, an increased number of devices (e.g., I/O devices) may be daisy chained (e.g., communicatively coupled in a daisy-chain configuration or topology) with decrease(s) in device latency. For example, for a specified number of devices and cycle time, the latency (e.g., the device latency, the communication latency, etc.) must meet the minimum cycle time. In some such examples, the packet forwarding latency is 2 microseconds (us) or less to meet the minimum cycle time.

Some systems for daisy chaining of I/O devices include two instances of a network interface circuitry (NIC) on the same substrate. Some such systems may not be suitable for daisy chaining because of a relatively large packet forward latency, which may be 250 us or higher between the ports of the respective NICs. In some such systems, a host application may implement the forwarding of a packet (e.g., a data packet) from an ingress port of a first NIC to an egress port of a second NIC, which may incur substantially high latencies to forward the packet to another device (e.g., a device communicatively coupled to the egress port of the second NIC). For example, the first NIC may forward the packet to main memory (e.g., Double Data Rate (DDR) memory, flash memory, etc.) and the host application may copy the packet from a first memory space of the first NIC to a second memory space of the second NIC. The second NIC may fetch the packet and transmit the packet. In some such systems, the forwarding of the packet to the main memory, the copying of the packet to the second memory space, etc., may be the basis for the additional latency.

Some systems for daisy chaining of I/O devices include dedicated external switches to satisfy the stringent low latency requirements. Some such systems may not be suitable for some applications (e.g., commercial environments, industrial environments, etc.) because the systems may have increased bill of materials (BOM) cost, printed circuit board (PCB) space consumption, and overall platform power consumption.

Some systems for daisy chaining of I/O devices include software based virtual switches (vSwitch). In some such systems, a NIC may forward the packet at a hypervisor or virtual machine manager (VMM) level. In some such systems, the latencies achieved may be sub tens of microseconds and thereby may not be suitable for daisy-chaining applications (e.g., commercial daisy-chaining applications, industrial daisy-chaining applications, etc.). For example, the packet may be routed outside of the NIC to the hypervisor or VMM, which may add to the latency.

Examples disclosed herein include example network interface circuitry to implement deterministic low latency packet forwarding for daisy chaining of network devices. In some disclosed examples, the network interface circuitry includes an example local memory mapped buffer and an example packet forwarding engine (PFE) circuitry housed and/or otherwise disposed between multiple NICs. In some disclosed examples, the local buffer may intercept packets identified to be routed from an ingress port of a first NIC to an egress port of a second NIC. Advantageously, the local buffer may store the intercepted packets locally, which may substantially reduce the latency from prior systems. For example, the network interface circuitry described herein may achieve packet forwarding latencies of less than 2 us, which is substantially less than the 10 us, 250 us, etc., packet forwarding latencies of the above-described systems.

In some disclosed examples, the network interface circuitry includes example parser circuitry to identify packets to be forwarded in a daisy-chain topology. For example, the parser circuitry may filter the packets at ingress port(s) of a NIC based on filtering rules. In some such examples, the parser circuitry may route and/or otherwise cause packets to be routed based on the filtering rules. For example, the parser circuitry may cause a packet to be routed to the local buffer to reduce latency (e.g., communication latency, forwarding latency, packet forwarding latency, etc.).

In some disclosed examples, the PFE circuitry may generate and/or otherwise manage descriptor ring formation and data buffer pointers to reduce and/or otherwise eliminate latencies that may be incurred by a host application (e.g., application software and/or a corresponding kernel), a driver, etc. Advantageously, the network interface circuitry may implement an enhanced and/or otherwise improved gate control list at an egress port of a NIC to cause packets to be transmitted in response to the packets being stored in the local buffer, which may reduce latency (e.g., communication latency between network device(s)). Advantageously, the network interface circuitry may route packets transmitted in a daisy-chain topology within the network interface circuitry to achieve reduced and/or otherwise improved packet forwarding latencies compared to prior packet forwarding systems. In some such examples, the network interface circuitry may achieve packet forwarding latencies of less than 2 us for packets of various sizes (e.g., 64 bytes (B), 128B, etc.). Advantageously, the example network interface circuitry may achieve increased determinism because the packets may be routed within the network interface circuitry and the corresponding latencies may be bounded due to avoidance of interference from other network traffic sources such as graphics operations, peripheral component interconnect express (PCIe) operations, CPU-to-memory operations, etc.

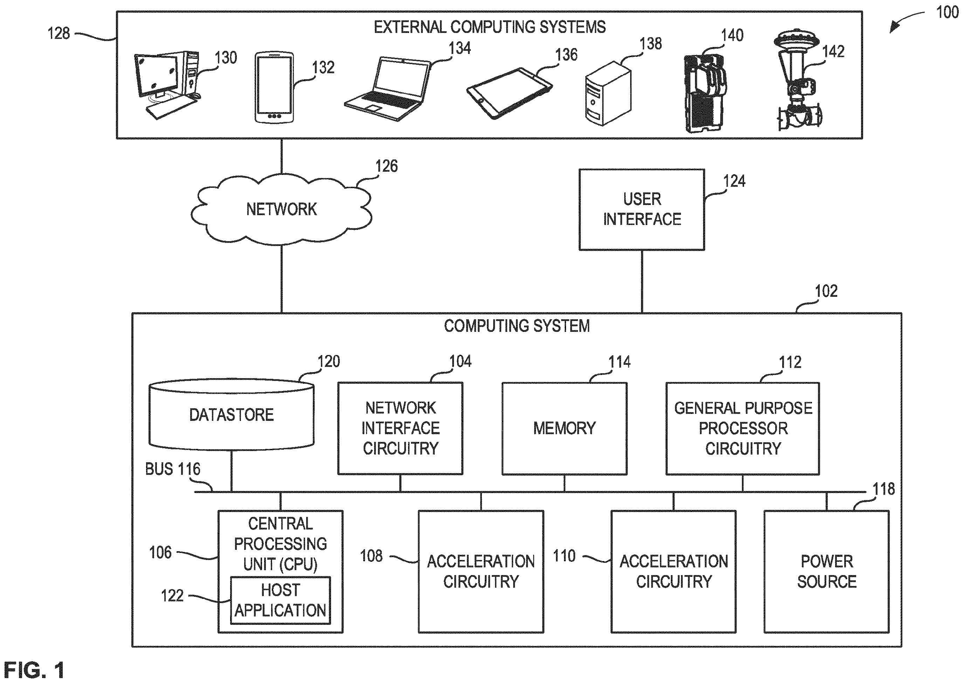

FIG. 1 is an illustration of an example computing environment 100 including an example computing system 102, which includes example network interface circuitry 104 to facilitate low latency data communication. The computing system 102 of the illustrated example includes an example central processing unit (CPU) 106, first example acceleration circuitry 108, second example acceleration circuitry 110, example general purpose processor circuitry 112, example memory 114, an example bus 116, an example power source 118, and an example datastore 120. In this example, the CPU 106 may implement an example host application 122. Further depicted in the illustrated example of FIG. 1 are an example user interface 124, an example network 126, and example external computing systems 128.

In some examples, the computing system 102 may be a system on a chip (SoC) representative of one or more integrated circuits (ICs) (e.g., compact ICs) that incorporate components of a computer or other electronic system in a compact format. For example, the computing system 102 may be implemented with a combination of one or more programmable processors, hardware logic, and/or hardware peripherals and/or interfaces. Additionally or alternatively, the example computing system 102 of FIG. 1 may include input/output (I/O) port(s), input device(s), output device(s), and/or secondary storage. For example, the computing system 102 may include the network interface circuitry 104, the CPU 106, the first acceleration circuitry 108, the second acceleration circuitry 110, the general purpose processor circuitry 112, the memory 114, the bus 116, the power source 118, the datastore 120, the I/O port(s), the input device(s), the output device(s), and/or the secondary storage all on the same substrate (e.g., a silicon substrate, a semiconductor-based substrate, etc.). In some examples, the computing system 102 may include digital, analog, mixed-signal, radio frequency (RF), or other signal processing functions.

In the illustrated example of FIG. 1, the network interface circuitry 104 is hardware that may implement one or more interfaces (e.g., computing interfaces, network interfaces, etc.). For example, the network interface circuitry 104 may be hardware, software, and/or firmware that implements a communication device (e.g., network interface circuitry (NIC), a smart NIC, a gateway, a switch, etc.) such as a transmitter, a receiver, a transceiver, a modem, a residential gateway, a wireless access point, and/or, more generally, a network interface, to facilitate exchange of data with external machines (e.g., computing devices of any kind) by the network 126. In some examples, the network interface circuitry 104 may implement communication by a Bluetooth^{®} connection, an Ethernet connection, a digital subscriber line (DSL) connection, a wireless fidelity (Wi-Fi) connection, a telephone line connection, a coaxial cable system, a satellite system, a line-of-site wireless system, a cellular telephone system, an optical connection (e.g., a fiber-optic connection), etc. For example, the network interface circuitry 104 may be implemented by any type of interface standard, such as a Bluetooth^{®} interface, an Ethernet interface, a Wi-Fi interface, a universal serial bus (USB), a near field communication (NFC) interface, a peripheral component interconnect (PCI) interface, and/or a PCIe interface.

In the illustrated example of FIG. 1, the CPU 106 may execute the host application 122 to cause an execution of a workload (e.g., a computational workload a compute workload, etc.) by hardware of the computing system 102 such as the CPU 106, the first acceleration circuitry 108, the second acceleration circuitry 110, etc. In some examples, the host application 122 may implement one or more drivers that may facilitate access to data stored in the network interface circuitry 104, the memory 114, etc. In some examples, the host application 122 may be implemented with one or more containers, one or more virtual resources (e.g., virtualizations of compute, memory, networking, storage, etc., physical hardware resources), one or more virtual machines, etc. In some examples, the host application 122 may implement a hypervisor, a virtual machine manager (VMM), etc.

In the illustrated example of FIG. 1, the first acceleration circuitry 108 and the second acceleration circuitry 110 are hardware accelerators. For example, the first acceleration circuitry 108 and/or the second acceleration circuitry 110 may be artificial intelligence (AI) accelerator(s). For example, the first acceleration circuitry 108 and/or the second acceleration circuitry 110 may be implemented by a hardware accelerator configured to accelerate AI tasks or workloads, such as NNs (e.g., artificial neural networks (ANNs)), machine vision, machine learning, etc. In some examples, the first acceleration circuitry 108 and/or the second acceleration circuitry 110 may implement vision processor unit(s) (VPU(s)) to effectuate machine or computer vision computing tasks, train and/or execute a physical neural network, and/or train and/or execute a neural network.

In some examples, the first acceleration circuitry 108 and/or the second acceleration circuitry 110 may be graphics processor unit(s) (GPU(s)). For example, the first acceleration circuitry 108 and/or the second acceleration circuitry 110 may be GPU(s) that generate(s) computer graphics, execute(s) general-purpose computing, etc. In some examples, the first acceleration circuitry 108 is an instance of the second acceleration circuitry 110. For example, the first acceleration circuitry 108 and the second acceleration circuitry 110 may be implemented with the same type of hardware accelerator. In some examples, the first acceleration circuitry 108 and the second acceleration circuitry 110 may be implemented with different types of hardware accelerators.

The general purpose processor circuitry 112 of the example of FIG. 1 is programmable processor circuitry, such as a CPU or a GPU. Alternatively, one or more of the first acceleration circuitry 108, the second acceleration circuitry 110, and/or the general purpose processor circuitry 112 may be a different type of hardware such as a digital signal processor (DSP), an application specific integrated circuit (ASIC), a programmable logic device (PLD), and/or a field programmable logic device (FPLD) (e.g., a field-programmable gate array (FPGA)).

The computing system 102 includes the memory 114 to store data such as packets (e.g., communication packets, data packets, etc.). For example, the memory 114 may store packets received by the network interface circuitry 104 and/or transmitted by the network interface circuitry 104. In some examples, the memory 114 may be implemented by a volatile memory (e.g., a Synchronous Dynamic Random Access Memory (SDRAM), a Dynamic Random Access Memory (DRAM), a RAMBUS Dynamic Random Access Memory (RDRAM), a double data rate (DDR) memory, such as DDR, DDR2, DDR3, DDR4, mobile DDR (mDDR), etc.)) and/or a non-volatile memory (e.g., flash memory, a hard disk drive (HDD), etc.).

The computing system 102 includes the power source 118 to deliver power to hardware of the computing system 102. In some examples, the power source 118 may implement a power delivery network. For example, the power source 118 may implement an alternating current-to-direct current (AC/DC) power supply. In some examples, the power source 118 may be coupled to a power grid infrastructure such as an AC main (e.g., a 110 volt (V) AC grid main, a 220 V AC grid main, etc.). Additionally or alternatively, the power source 118 may be implemented by a battery. For example, the power source 118 may be a limited energy device, such as a lithium-ion battery or any other chargeable battery or power source. In some such examples, the power source 118 may be chargeable using a power adapter or converter (e.g., an AC/DC power converter), a wall outlet (e.g., a 110 V AC wall outlet, a 220 V AC wall outlet, etc.), a portable energy storage device (e.g., a portable power bank, a portable power cell, etc.), etc.

The computing system 102 of the illustrated example of FIG. 1 includes the datastore 120 to record data. The datastore 120 of this example may be implemented by a volatile memory (e.g., an SDRAM, a DRAM, an RDRAM, etc.) and/or a non-volatile memory (e.g., flash memory). The datastore 120 may additionally or alternatively be implemented by one or more DDR memories. The datastore 120 may additionally or alternatively be implemented by one or more mass storage devices such as HDD(s), compact disk (CD) drive(s), digital versatile disk (DVD) drive(s), solid-state disk (SSD) drive(s), etc. While in the illustrated example the datastore 120 is illustrated as a single datastore, the datastore 120 may be implemented by any number and/or type(s) of datastores. Furthermore, the data stored in the datastore 120 may be in any data format such as, for example, binary data, comma delimited data, tab delimited data, structured query language (SQL) structures, an executable, etc.

In the illustrated example of FIG. 1, the computing system 102 is in communication with the user interface 124. For example, the user interface 124 may be implemented by a graphical user interface (GUI), an application user interface, etc., which may be presented to a user on a display device in circuit with and/or otherwise in communication with the computing system 102. In some such examples, a user (e.g., a developer, an IT administrator, a customer, etc.) may control the computing system 102 by the user interface 124. Alternatively, the computing system 102 may include and/or otherwise implement the user interface 124.

In the illustrated example of FIG. 1, the network interface circuitry 104, the CPU 106, the first acceleration circuitry 108, the second acceleration circuitry 110, the general purpose processor circuitry 112, the memory 114, the power source 118, and/or the datastore 120 is/are in communication with one(s) of each other via the bus 116. For example, the bus 116 may be implemented by at least one of an Inter-Integrated Circuit (I2C) bus, a Serial Peripheral Interface (SPI) bus, a Peripheral Component Interconnect (PCI) bus, or a PCIe bus. In some such examples, the bus 116 may implement bus circuitry, which may implement the I2C bus, the SPI bus, the PCI bus, the PCIe bus, etc. Additionally or alternatively, the bus 116 may be implemented by any other type of computing or electrical bus.

In the illustrated example of FIG. 1, the network 126 is the Internet. However, the network 126 of this example may be implemented using any suitable wired and/or wireless network(s) including, for example, one or more data buses, one or more Local Area Networks (LANs), one or more wireless LANs, one or more cellular networks, one or more private networks, one or more public networks, etc. In some examples, the network 126 enables the computing system 102 to be in communication with one(s) of the external computing systems 128 by the network interface circuitry 104.

In the illustrated example of FIG. 1, the external computing systems 128 include and/or otherwise implement one or more computing devices. In this example, the external computing systems 128 include an example desktop computer 130, an example mobile device (e.g., a smartphone, an Internet-enabled smartphone, etc.) 132, an example laptop computer 134, an example tablet (e.g., a tablet computer, an Internet-enabled tablet computer, etc.) 136, an example server 138, an example programmable logic controller (PLC) 140, and an example I/O device 142. In this example, the I/O device 142 is a fluid flow control assembly including a valve, an actuator, and valve control processor circuitry. In some examples, fewer or more than the external computing systems 128 depicted in FIG. 1 may be used. Additionally or alternatively, the external computing systems 128 may include, correspond to, and/or otherwise be representative of, any other type and/or quantity of computing devices.

In some examples, the network 126 may implement a topology (e.g., a network topology) based on a daisy-chain configuration. For example, the network interface circuitry 104 may receive a packet from the I/O device 142 to be forwarded and/or otherwise transmitted to the PLC 140. In some such examples, the network interface circuitry 104 may store the packet in local memory of the network interface circuitry 104 and forward the packet from the local memory to the PLC 140. Advantageously, the network interface circuitry 104 may reduce latency in connection with forwarding the packet from the I/O device 142 to the PLC 140 by routing the packet within the network interface circuitry 104 instead of external hardware (e.g., the CPU 106), software (e.g., the host application 122), and/or firmware (e.g., a driver, the host application 122, etc.) routing the packet.

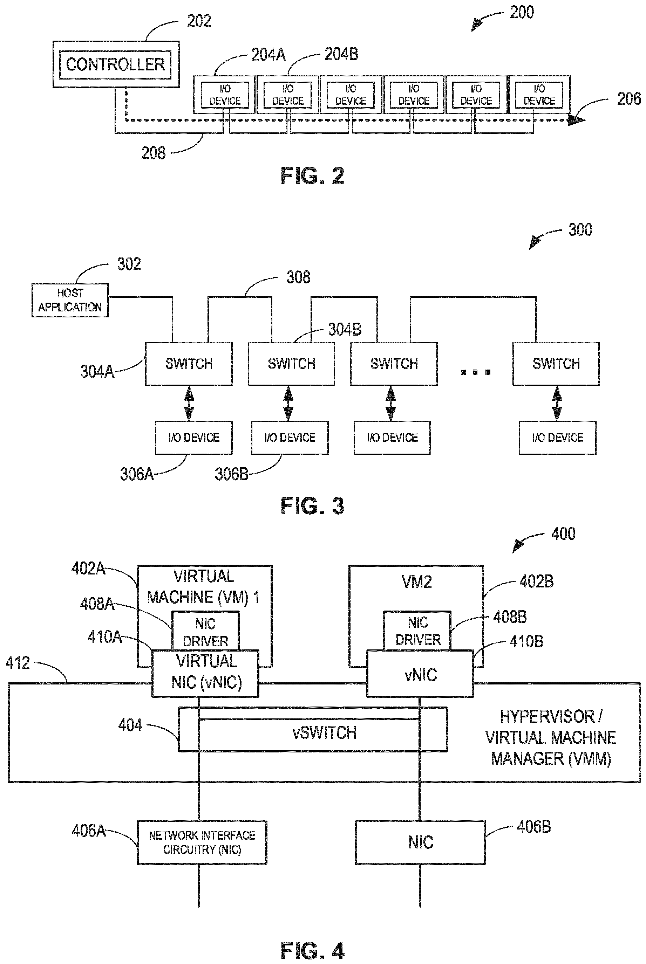

FIG. 2 is a first example system 200 including an example controller 202 in communication with example input/output (I/O) devices 204A, 204B in an example daisy-chain configuration to facilitate example data communication 206 by an example network 208. In some examples, the controller 202 may implement the PLC 140 of FIG. 1. In some examples, the I/O devices 204A, 204B may implement instances of the I/O device 142 of FIG. 1. Alternatively, one or more of the I/O devices 204A, 204B may be different from one(s) of each other. In some examples, the network 208 may implement the network 126 of FIG. 1. For example, the network 208 may implement a data bus based on an industrial communication protocol (e.g., Profinet, Modbus TCP/IP, etc.).

In the illustrated example of FIG. 2, the I/O devices 204A, 204B include a first example I/O device 204A and a second example I/O device 204B. In this example, each of the I/O devices 204A, 204B include a NIC with two NIC ports including an ingress port and an egress port. For example, an egress port of a NIC of the controller 202 may be coupled to an ingress port of the first I/O device 204A, an egress port of the first I/O device 204A may be coupled to an ingress port of the second I/O device 204B, and so forth to implement the daisy-chain configuration of the network 208.

In the illustrated example of FIG. 2, the packets are received by the NICs of the I/O devices 204A, 204B and are forwarded to main memory of the NICs. In some examples, the packets may be forwarded from the main memory to a host application. In some such examples, the host application may implement the packet forwarding from one NIC ingress port to another NIC egress port. In some examples, the first system 200 may have increased packet latencies due to the packet forwarding being executed by the host application. For example, the first system 200 may achieve a minimum latency of more than 250 us, which may not be suitable for time sensitive industrial applications where less than 2 us latency may be required.

FIG. 3 is a second example system 300 including an example host application 302, example switches 304A, 304B, and example I/O devices 306A, 306B in an example daisy-chain configuration to facilitate data communication by an example network 308. In some examples, the host application 302 may implement the host application 122 of FIG. 1. For example, the CPU 106, the PLC 140, etc., may execute the host application 122. In some examples, the switch 304A, 304B may implement the network interface circuitry 104 of FIG. 1. In some examples, the I/O devices 306A, 306B may implement instances of the I/O device 142 of FIG. 1. Alternatively, one or more of the I/O devices 306A, 306B may be different from one(s) of each other. In some examples, the network 308 may implement the network 126 of FIG. 1. For example, the network 308 may implement a data bus based on an industrial communication protocol (e.g., Profinet, Modbus TCP/IP, etc.).

In the illustrated example of FIG. 3, the switches 304A, 304B include a first example switch 304A and a second example switch 304B. In this example, the I/O devices 306A, 306B include a first example I/O device 306A and a second example I/O device 306B. In this example, each of the switches 304A, 304B include an ingress port and an egress port. For example, an egress port of a NIC associated with the host application 302 may be coupled to an ingress port of the first switch 304A, an egress port of the first switch 304A may be coupled to an ingress port of the second switch 304B, and so forth to implement the daisy-chain configuration of the network 308.

The second system 300 of the illustrated example may achieve relatively low latencies due to having dedicated ones of the switches 304A, 304B for respective ones of the I/O devices 306A, 306B. In this example, the second system 300 has increased BOM cost, PCB space consumption (e.g., a PCB that includes the first switch 304A and the first I/O device 306A may have a disproportionate amount of space of the PCB being consumed by the first switch 304A), and power consumption.

FIG. 4 is a third example system 400 including example virtual machines (VMs) 402A, 402B, an example virtual switch (vSWITCH) 404, and example NICs 406A, 406B to facilitate data communication. In this example, the VMs 402A, 402B include a first example VM 402A that implements a first example NIC driver 408A. The VMs 402A, 402B include a second example VM 402B that implements a second example NIC driver 408B. In this example, the first NIC driver 408A is in communication with the virtual switch 404 by a first example virtual NIC (vNIC) 410A. In this example, the second NIC driver 408B is in communication with the virtual switch 404 by a second example vNIC 410B. In this example, the virtual switch 404 is implemented by and/or otherwise included in an example virtual appliance 412 that may be implemented by a hypervisor or virtual machine manager (VMM). In this example, the virtual switch 404 facilitates communication between the NICs 406A, 406B and the vNICs 410A, 410B.

In the illustrated example of FIG. 4, packets are forwarded at the layer of the VMM 412. For example, the first NIC 406A may provide a data packet to the virtual switch 404. The virtual switch 404 may provide the data packet to the first VM 402A by the first vNIC 410A. The first NIC driver 408A may forward the data packet to the second NIC 406B by instructing the first vNIC 410A to provide the data packet to the second NIC 406B by the virtual switch 404. In some examples, the third system 400 may achieve lower latencies with respect to the first system 200 of FIG. 2 but higher latencies with respect to the second system 300 of FIG. 3. For example, the third system 400 may achieve latencies in the order of few tens of microseconds (e.g., 10 us, 20 us, 50 us, etc.). In some such examples, the third system 400 may not achieve latency requirements of industrial applications, which may be a latency requirement of less than 2 us for time sensitive industrial applications. In some examples, the third system 400 may be susceptible to indeterminism, which may be caused by other interfering traffic such as graphics, PCIe, CPU-to-memory, etc., related traffic (e.g., packet or data packet traffic).

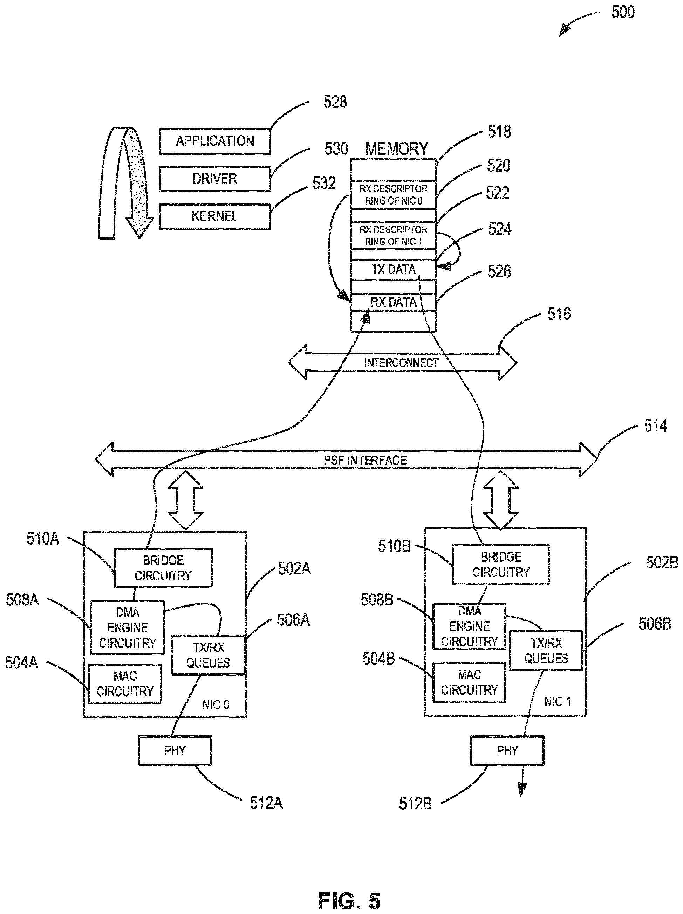

FIG. 5 is a fourth example system 500 including first example network interface circuitry (NIC 0) 502A and second example network interface circuitry (NIC 1) 502B to facilitate data communication between network devices, which may be implemented by the computing system 102 of FIG. 1, one(s) of the external computing systems 128 of FIG. 1, etc. In some examples, the first NIC 502A, the second NIC 502B, or portion(s) thereof, may be implemented by the network interface circuitry 104 of FIG. 1.

The first NIC 502A includes first example media access control (MAC) circuitry 504A, first example queues 506A, first example direct memory access (DMA) engine circuitry 508A, and first example bridge circuitry 510A. In this example, the queues 506A may include one or more transmit (TX) queues and/or one or more receive (RX) queues. The first NIC 502A is coupled to a first example physical layer (PHY) 512A, which may be implemented by a communication port (e.g., an Ethernet port).

The second NIC 502B includes second example MAC circuitry 504B, second example queues 506B, second example DMA engine circuitry 508B, and second example bridge circuitry 510B. In this example, the queues 506B may include one or more TX queues and/or one or more RX queues. The second NIC 502B is coupled to a second example physical layer (PHY) 512B, which may be implemented by a communication port (e.g., an Ethernet port).

The first bridge circuitry 510A and the second bridge circuitry 510B are coupled to an example IOSF primary system fabric (PSF) interface 514. The PSF interface 514 is coupled to an example interconnect (e.g., a die-to-die interconnect) 516. In some examples, the PSF interface 514 may implement an interface between hardware (e.g., one(s) of the NICs 502A, 502B) and a different interface and/or interconnect. In some examples, the interconnect 516 may implement an interface between hardware and a different interface, such as the NICs 502A, 502B and example memory 518. In some examples, the interconnect 516 may be implemented by a die-to-die interconnect such as direct media interface (DMI), an on package interface (OPI), etc. The memory 518 of the illustrated example includes an example receive (RX) descriptor ring 520 of the first NIC 502A, an example transmit (TX) descriptor ring 522 of the second NIC 502B, example TX data 524, and example RX data 526.

In the illustrated example of FIG. 5, an example application (e.g., a host application) 528 may generate the RX descriptor ring 520 and/or the TX descriptor ring 522. In some such examples, the application 528 may instruct an example kernel 532 by an example driver 530 to generate at least one of the RX descriptor ring 520 or the TX descriptor ring 522. In some examples, the RX descriptor ring 520 may include first indirect address pointers to the RX data 526. In some examples, the TX descriptor ring 522 may include second indirect address pointers to the TX data 524. For example, the driver 530 may update a tail pointer (e.g., a receive tail pointer, a transmit tail pointer, etc.) of the first DMA engine circuitry 508A and/or the second DMA engine circuitry 508B to initialize the first DMA engine circuitry 508A and/or the second DMA engine circuitry 508B.

In some examples, in response to an update of the tail pointer of the first DMA engine circuitry 508A, the first DMA engine circuitry 508A may obtain RX descriptors from the RX descriptor ring 520. The first DMA engine circuitry 508A may parse the RX descriptors and write the data packet received from the first physical layer 512A into memory location(s) (e.g., location(s) within the RX data 526) of the memory 518 pointed by the first indirect address pointers. In response to writing the data packet into the memory location(s), the first DMA engine circuitry 508A may close the RX descriptors, which may cause the application 528 to access the data packet stored at the memory location(s).

In some examples, the application 528 may initialize a process to transmit a data packet utilizing the second physical layer 512B. For example, the application 528 may copy the data packet to be transmitted into memory space of the kernel 532. The driver 530 may invoke the kernel 532 to create TX descriptor(s) with indirect address pointers to the data packet in the TX descriptor ring 522. The driver 530 may start the second DMA engine circuitry 508B. In response to starting the second DMA engine circuitry 508B, the second DMA engine circuitry 508B may fetch the TX descriptor(s) from the TX descriptor ring 522. The second DMA engine circuitry 508B may parse the TX descriptor(s) and fetch the data packet from the memory location(s) in the TX data 524 indicated by the indirect address pointers of the TX descriptor(s). The second DMA engine circuitry 508B may push the data packet into a buffer (e.g., a local transmit buffer) of the second DMA engine circuitry 508B. The second DMA engine circuitry 508 may provide the data packet from the buffer to a TX queue of the second queues 506B. The second MAC circuitry 504B may cause the second physical layer 512B to transmit the data packet from the TX queue to a network device.

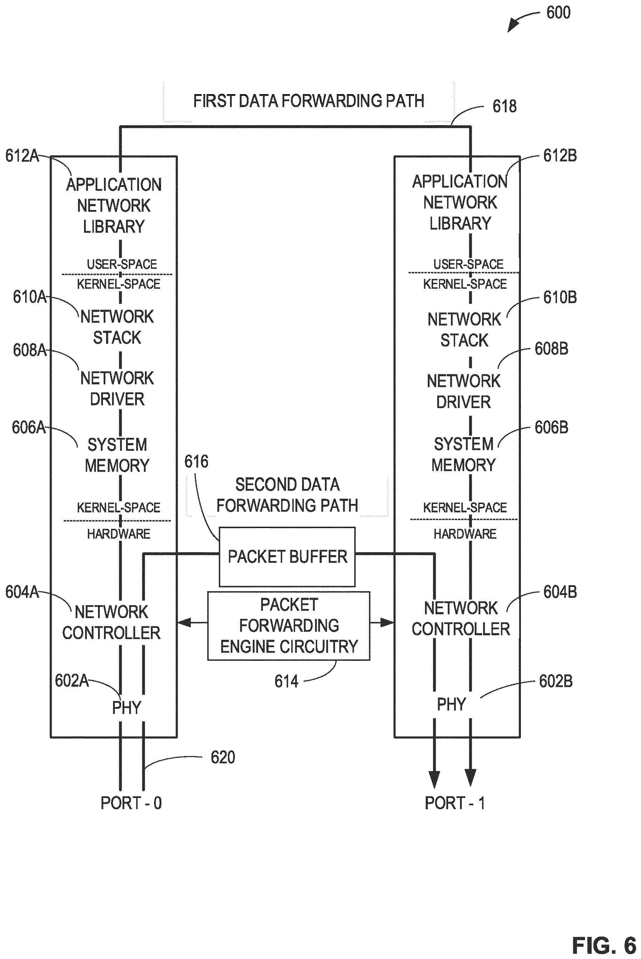

FIG. 6 is a fifth example system 600 to facilitate data communication between network devices. In some examples, the fifth system 600 may implement the network interface circuitry 104 of FIG. 1. For example, the fifth system 600 may implement a NIC including two or more ports (e.g., Port-0, Port-1, etc.). The fifth system 600 may be implemented by a first example physical layer (PHY) 602A, a first example network controller 604A, first example system memory 606A, a first example network driver 608A, a first example network stack 610A, and a first example application network library 612A corresponding to the first port. The fifth system 600 may be implemented by a second example physical layer (PHY) 602B, a second example network controller 604B, second example system memory 606B, a second example network driver 608B, a second example network stack 610B, and a second example application network library 612B corresponding to the second port. The fifth system 600 may be implemented by example packet forwarding engine circuitry 614 and an example packet buffer 616.

In the illustrated example of FIG. 6, the fifth system 600 may implement a first example data forwarding path 618 and a second example data forwarding path 620. For example, the first data forwarding path 618 and the second data forwarding path 620 may each implement a packet forwarding operation based on a daisy-chain configuration of network devices. In this example, the fifth system 600 may forward a first data packet received at the first port to the second port utilizing the first data forwarding path 618. In this example, the first data forwarding path 618 may utilize an additional application software, an additional virtual switch (vSWITCH), etc., to implement the packet forwarding operation. For example, the application software may wait for the first data packet to be written into the first system memory 606A until the application software by the first application network library 612A can copy the first data packet into the second system memory 606B. In some such examples, the first data packet may follow the first data forwarding path 618 by proceeding from the hardware space of the first port to the kernel-space of the first port, the kernel-space of the first port to the user-space of the first port, the user-space of the first port to the second user-space of the second port, the second user-space of the second port to the kernel-space of the second port, and the kernel-space of the second port to the hardware space of the second port.

In the illustrated example of FIG. 6, the fifth system 600 may forward a second data packet received at the first port to the second port utilizing the second data forwarding path 620. In this example, the second data packet may be received at the first port and the packet forwarding engine circuitry 614 may instruct the first network controller 604A to store the second data packet in the packet buffer 616. In this example, in response to storing the second data packet in the packet buffer 616, the packet forwarding engine circuitry 614 may instruct the second network controller 604B to retrieve the second data packet from the packet buffer 616. The second network controller 604B may transmit the second data packet by the second port.

Advantageously, the packet forwarding engine circuitry 614 may reduce latency associated with forwarding the second data packet between ports of network interface circuitry by storing the second data packet locally in the packet buffer 616 and forwarding the second data packet within the hardware layer of the fifth system 600. In some examples, the fifth system 600 may execute forwarding of a data packet from the first port to the second port utilizing the first data forwarding path 618 in tens or hundreds of microseconds (e.g., 10 us, 20 us, 100 us, 250 us, etc.), which may not be suitable for time sensitive applications. Advantageously, the fifth system 600 may execute forwarding of a data packet from the first port to the second port utilizing the second data forwarding path 620 in substantially less time than the first data forwarding path 618 by forwarding the data packet at the hardware layer of the fifth system 600. For example, the fifth system 600 may forward the data packet from the first port to the second port by the second data forwarding path in 2 us or less, 3 us or less, etc., which is suitable for time sensitive applications.

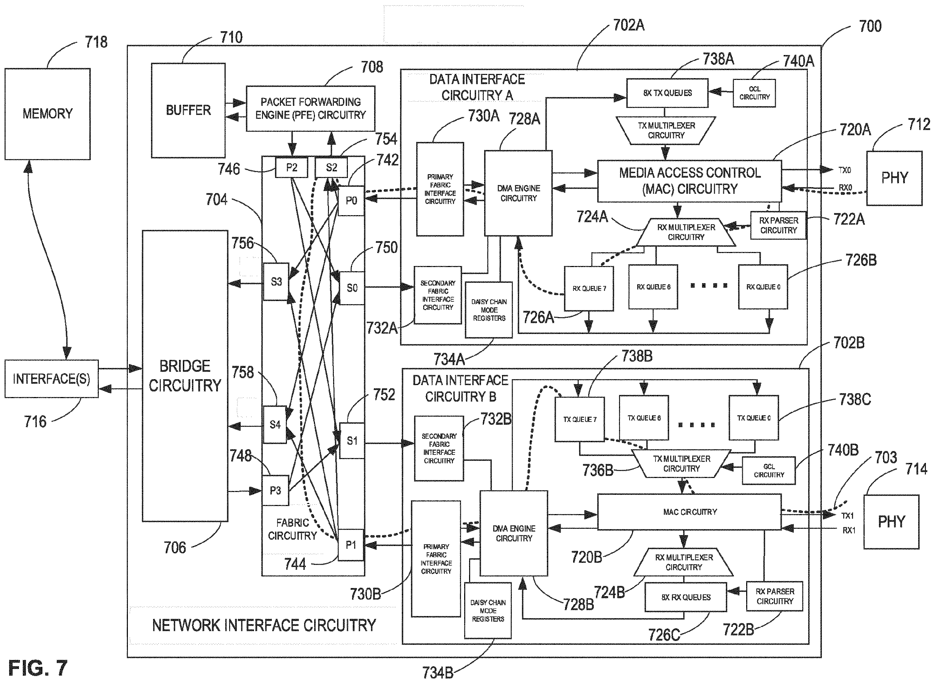

FIG. 7 is a block diagram of example network interface circuitry 700. In some examples, the network interface circuitry 700 may implement the network interface circuitry 104 and/or the fifth system 600 of FIG. 6. The network interface circuitry 700 includes first example data interface circuitry (DATA INTERFACE CIRCUITRY A) 702A, second example data interface circuitry (DATA INTERFACE CIRCUITRY B) 702B, example fabric circuitry 704, example bridge circuitry 706, example packet forwarding engine (PFE) circuitry 708, and an example buffer 710. In this example, the buffer 710 may implement a descriptor and packet buffer. In some examples, the buffer 710 may implement a data forwarding buffer, a packet forwarding buffer, a data packet forwarding buffer, etc. For example, the buffer 710 may include and/or otherwise be configured to store RX descriptor(s), an RX descriptor ring, TX descriptor(s), a TX descriptor ring, data packet(s), etc., and/or a combination thereof.

In some examples, the first data interface circuitry 702A may implement a first NIC and the second data interface circuitry 702B may implement a second NIC. In some examples, the first data interface circuitry 702A and the second data interface circuitry 702B may implement a single NIC with different function numbers (e.g., two separate bus-to-device functions (BDFs)).

In some examples, the network interface circuitry 700 may implement a single printed circuit board (PCB). For example, the network interface circuitry 700 may implement a PCI and/or PCIe device. In some examples, the network interface circuitry 700 may implement two or more PCBs. For example, the first data interface circuitry 702A may implement a first PCB, the second data interface circuitry 702B may implement a second PCB, the fabric circuitry 704 may implement a third PCB, the bridge circuitry 706 may implement a fourth PCB, the PFE circuitry 708 may implement a fifth PCB, and/or the buffer 710 may implement a sixth PCB. In some such examples, one or more of the first through sixth PCBs may be combined, divided, re-arranged, omitted, eliminated, and/or implemented in any other way.

In some examples, the network interface circuitry 700 may implement one or more integrated circuits (ICs). For example, the first data interface circuitry 702A may implement a first IC, the second data interface circuitry 702B may implement a second IC, the fabric circuitry 704 may implement a third IC, the bridge circuitry 706 may implement a fourth IC, the PFE circuitry 708 may implement a fifth IC, and/or the buffer 710 may implement a sixth IC. In some such examples, one or more of the first through sixth ICs may be combined, divided, re-arranged, omitted, eliminated, and/or implemented in any other way.

In this example, the network interface circuitry 700 may implement a daisy-chain network topology by forwarding data packets by an example packet forwarding path 703. For example, the first data interface circuitry 702A and the second data interface circuitry 702B, and/or, more generally, the network interface circuitry 700, may receive a data packet and transmit the data packet to different network device circuitry (e.g., a different network device) by the packet forwarding path 703 of the illustrated example.

In the illustrated example, the first data interface circuitry 702A may receive packets (e.g., data packets, communication packets, packet flows, etc.) from and/or transmit packets to a first example physical layer 712, which may be implemented by a physical cable (e.g., a Cat5 Ethernet cable, a Cat6 Ethernet cable, a fiber optic cable, etc.), a physical port (e.g., a Cat5 port, a Cat6 port, fiber-to-copper interface circuitry, etc.), etc., and/or a combination thereof. The second data interface circuitry 702B may receive packets from and/or transmit packets to a second example physical layer 714.

In some examples, the first data interface circuitry 702A may implement at least one of the first MAC circuitry 504A, the first queues 506A, or the first DMA engine circuitry 508A of FIG. 5. In some examples, the second data interface circuitry 702B may implement at least one of the second MAC circuitry 504B, the second queues 506B, or the second DMA engine circuitry 508B of FIG. 5.

In the illustrated example of FIG. 7, the first data interface circuitry 702A and the second data interface circuitry 702B are coupled to the fabric circuitry 704. The fabric circuitry 704 is coupled to the PFE circuitry 708. In some examples, the PFE circuitry 708 may implement the packet forwarding engine circuitry 614 of FIG. 6. The PFE circuitry 708 is coupled to the buffer 710. In some examples, the buffer 710 may implement the packet buffer 616 of FIG. 6. The fabric circuitry 704 is coupled to the bridge circuitry 706. In some examples, the bridge circuitry 706 may implement the first bridge circuitry 510A of FIG. 5 and/or the second bridge circuitry 510B of FIG. 5. The bridge circuitry 706 is coupled to example interface(s) 716. The interface(s) 716 may implement one or more interfaces, which may include a PSF interface (e.g., the PSF interface 514 of FIG. 5), a DMI interface (e.g., the interconnect 516 of FIG. 5), an OPI interface (e.g., the interconnect 516 of FIG. 5), etc., and/or a combination thereof. Alternatively, the bridge circuitry 706 may implement interconnect circuitry such as die-to-die interconnect circuitry.

The interface(s) 716 is/are coupled to the memory 718. For example, the interface(s) 716 may write data to the memory 718 and/or retrieve data from the memory 718. In some examples, the memory 718 may implement the memory 518 of FIG. 5, the first system memory 606A of FIG. 6, and/or the second system memory 606B of FIG. 6. For example, the memory 718 may be implemented by volatile memory (e.g., an SDRAM, a DRAM, an RDRAM, a DDR memory, such as DDR, DDR2, DDR3, DDR4, mDDR, etc.) and/or a non-volatile memory (e.g., flash memory, an HDD, etc.).

The first data interface circuitry 702A of the illustrated example includes first example MAC circuitry 720A, first example receive (RX) parser circuitry 722A, first example receive (RX) multiplexer circuitry 724A, first example RX queues 726A, 726B, first example DMA engine circuitry 728A, first example primary fabric interface circuitry 730A, first example secondary fabric interface circuitry 732A, first example daisy chain mode registers 734A, first example transmit (TX) multiplexer circuitry 736A, first example transmit (TX) queues 738A, and first example gate control list (GCL) circuitry 740A.

In this example, the first TX queues 738A are implemented by 8 queues, which may be buffers (e.g., queue buffers, first-in first-out (FIFO) buffers, or any other type of buffer). Alternatively, the first TX queues 738A may include a different number of queues. In this example, the first RX queues 726A, 726B include a first example RX queue 726A, which may implement a packet forwarding RX queue, and a second example RX queue 726B. In this example, the first RX queues 726A, 726B are implemented by 8 queues (e.g., RX QUEUEO-RX QUEUE7), which may be buffers (e.g., queue buffers, FIFO buffers, or any other type of buffer). Alternatively, the first RX queues 726A, 726B may include a different number of queues.

The second data interface circuitry 702B of the illustrated example includes second example MAC circuitry 720B, second example receive (RX) parser circuitry 722B, second example receive (RX) multiplexer circuitry 724B, second example RX queues 726C, second example DMA engine circuitry 728B, second example primary fabric interface circuitry 730B, second example secondary fabric interface circuitry 732B, second example daisy chain mode registers 734B, second example transmit (TX) multiplexer circuitry 736B, second example transmit (TX) queues 738B, 738C, and second example GCL circuitry 740B.

In this example, the second TX queues 738B, 738C are implemented by 8 queues (e.g., TX QUEUE0-TX QUEUE7), which may be buffers (e.g., FIFO buffers or any other type of buffer). Alternatively, the second TX queues 738B, 738C may include a different number of queues. In this example, the second TX queues 738B, 738C include a first example TX queue 738B, which may implement a packet forwarding TX queue, and a second example TX queue 738C. In this example, the second RX queues 726C are implemented by 8 queues, which may be buffers (e.g., FIFO buffers or any other type of buffer). Alternatively, the second RX queues 726C may include a different number of queues.

The fabric circuitry 704 of the illustrated example may be implemented by interconnect circuitry (e.g., point-to-point interconnect circuitry). For example, the fabric circuitry 704 may be implemented by a parallel, synchronous, multi-primary, multi-secondary communication interface to implement on-chip communication. In some examples, the fabric circuitry 704 may be implemented by an Advanced eXtensible Interface (AXI) fabric. Alternatively, the fabric circuitry 704 may be implemented by any other type of communication interface circuitry. In this example, the fabric circuitry 704 includes a first example primary port (P0) 742, a second example primary port (P1) 744, a third example primary port (P2) 746, a fourth example primary port (P3) 748, a first example secondary port (S0) 750, a second example secondary port (S1) 752, a third example secondary port (S2) 754, a fourth example secondary port (S3) 756, and a fifth example secondary port (S4) 758.

In the illustrated example of FIG. 7, the first physical layer 712 is coupled to input(s) and/or output(s) of the first MAC circuitry 720A. Output(s) of the first MAC circuitry 720A is/are coupled to the input(s) of the first RX parser circuitry 722A. Output(s) of the first MAC circuitry 720A is/are coupled to input(s) of the first RX multiplexer circuitry 724A. Output(s) of the first RX parser circuitry 722A is/are coupled to input(s) (e.g., control input(s), selection input(s), etc.) of the first RX multiplexer circuitry 724A. Output(s) of the first RX multiplexer circuitry 724A is/are coupled to respective input(s) of the first RX queues 726A, 726B. Output(s) of the first RX queues 726A, 726B is/are coupled to input(s) of the first DMA engine circuitry 728A. Inputs(s) and/or output(s) of the first daisy chain registers 734A is/are coupled to input(s) and/or output(s) of the first DMA engine circuitry 728A. Output(s) of the first secondary fabric interface circuitry 732A is/are coupled to input(s) of the first DMA engine circuitry 728A. Input(s) and/or output(s) of the first DMA engine circuitry 728A is/are coupled to input(s) and/or output(s) of the first MAC circuitry 720A. Output(s) of the first DMA engine circuitry 728A is/are coupled to respective input(s) of the first TX queues 73 8A. Output(s) of the first TX queues 738A is/are coupled to input(s) of the first TX multiplexer circuitry 736A. Output(s) of the first GCL circuitry 740A is/are coupled to input(s) of the first TX multiplexer circuitry 736A. Output(s) of the first TX multiplexer circuitry 736A is/are coupled to input(s) of the first MAC circuitry 720A.

In the illustrated example of FIG. 7, the second physical layer 714 is coupled to input(s) and/or output(s) of the second MAC circuitry 720B. Output(s) of the second MAC circuitry 720B is/are coupled to the input(s) of the second RX parser circuitry 722B. Output(s) of the second MAC circuitry 720B is/are coupled to input(s) of the second RX multiplexer circuitry 724B. Output(s) of the second RX parser circuitry 722B is/are coupled to input(s) (e.g., control input(s), selection input(s), etc.) of the second RX multiplexer circuitry 724B. Output(s) of the second RX multiplexer circuitry 724B is/are coupled to respective input(s) of the second RX queues 726C. Output(s) of the second RX queues 726C is/are coupled to input(s) of the second DMA engine circuitry 728B. Inputs(s) and/or output(s) of the second daisy chain registers 734B is/are coupled to input(s) and/or output(s) of the second DMA engine circuitry 728B. Output(s) of the second secondary fabric interface circuitry 732B is/are coupled to input(s) of the second DMA engine circuitry 728B. Input(s) and/or output(s) of the second DMA engine circuitry 728B is/are coupled to input(s) and/or output(s) of the second MAC circuitry 720B. Output(s) of the second DMA engine circuitry 728B is/are coupled to respective input(s) of the second TX queues 738B, 738C. Output(s) of the second TX queues 738B, 738C is/are coupled to input(s) of the second TX multiplexer circuitry 736B. Output(s) of the second GCL circuitry 740B is/are coupled to input(s) of the second TX multiplexer circuitry 736B. Output(s) of the second TX multiplexer circuitry 736B is/are coupled to input(s) of the second MAC circuitry 720B.

In the illustrated example of FIG. 7, the first primary port 742 is coupled to the first primary fabric interface circuitry 730A. The second primary port 744 is coupled to the second primary fabric interface circuitry 730B. The third primary port 746 is coupled to the PFE circuitry 708. The fourth primary port 748 is coupled to the bridge circuitry 706. The first secondary port 750 is coupled to the first secondary fabric interface circuitry 732A. The second secondary port 752 is coupled to the second secondary fabric interface circuitry 732B. The third secondary port 754 is coupled to the PFE circuitry 708. The fourth secondary port 756 is coupled to the bridge circuitry 706. The fifth secondary port 758 is coupled to the bridge circuitry 706.

In example operation, packets belonging to various traffic classes and queues may be routed through the fabric circuitry 704. For example, a first data packet received at the first physical layer 712 may be provided to the first MAC circuitry 720A by RX0. In some such examples, the first RX parser circuitry 722A may retrieve the first data packet or copy thereof from the first MAC circuitry 720A. In some examples, the first RX parser circuitry 722A and/or the second RX parser circuitry 722B may each implement a snoop filter. For example, the first RX parser circuitry 722A and/or the second parser circuitry 722B may implement filtering of data packet(s), or portion(s) thereof, based on match(es) or miss-match(es) of fields in the packet(s) by utilizing filter rule(s). For example, the first parser circuitry 722A and/or the second parser circuitry 722B may implement a first filter rule of routing received data packet(s) with a destination address of {01:02:03:04:05:06} from a first ingress port (e.g., RX0 of the first data interface circuitry 702A) to an egress port (e.g., TX1 of the second data interface circuitry 702B). In some such examples, the first parser circuitry 722A may instruct the first RX multiplexer circuitry 724A to provide the first data packet to the first RX queue 726A in response to a determination that the first data packet is to be forwarded.

In some examples, the first parser circuitry 722A and/or the second parser circuitry 722B may implement a second filter rule of routing received data packet(s) with a destination address of {07:04:05:04:09:01} to the memory 718. In some such examples, the first parser circuitry 722A may instruct the first RX multiplexer circuitry 724A to provide the first data packet to the second RX queue 726B in response to a determination that the first data packet is not to be forwarded and, thus, be stored in the memory 718 for access by a host application.

In some examples, the first RX parser circuitry 722A may inspect the first data packet or portion(s) thereof (e.g., a header, a payload (e.g., a data payload), etc., of the first data packet) to determine whether the first data packet is to be forwarded. For example, the first RX parser circuitry 722A may determine that the first data packet is to be routed from a first ingress port (e.g., RX0) of the first data interface circuitry 702A to a second egress port (e.g., TX1) of the second data interface circuitry 702B based on the inspection of the first data packet. For example, the first RX parser circuitry 722A may execute the first filter rule, the second filter rule, etc., to determine that the first data packet is to be forwarded from the first ingress port to the second egress port based on a first Internet Protocol (IP) address (e.g., a first destination IP address), a first IP port number (e.g., a first destination IP port number), a first MAC address (e.g., a first destination MAC address), etc., included in the header of the first data packet not matching a second IP address, a second IP port number, a second MAC address, etc., of the network interface circuitry 700. In some such examples, the first RX parser circuitry 722A may apply the first filter rule, the second filter rule, etc., to the first data packet, or portion(s) thereof, to determine that the network interface circuitry 700 is not the destination of the first data packet and, thus, needs to be forwarded to the final destination (e.g., a different network device, a different instance of the network interface circuitry 700, etc.).

In some examples, the first RX parser circuitry 722A may determine that the first data packet is to be stored in the memory 718 based on the first IP address, the first IP port number, the first MAC address, etc., included in the header of the first data packet matching the second IP address, the second IP port number, the second MAC address, etc., of the network interface circuitry 700. In some such examples, the first RX parser circuitry 722A may apply the first filter rule, the second filter rule, etc., to the first data packet, or portion(s) thereof, to determine that the network interface circuitry 700 is the destination of the first data packet and, thus, needs to be stored in the memory 718 for access by a host application (e.g., the host application 122 of FIG. 1, the application 528 of FIG. 5, etc.).

In some examples in which the first data packet is to be forwarded, the first RX queue 726A may provide the first data packet to the first DMA engine circuitry 728A. For example, the first DMA engine circuitry 728A may retrieve descriptors (e.g., TX descriptors, RX descriptors, etc.) from the buffer 710 and instruct the first MAC circuitry 720A to receive and/or transmit data packets based on the descriptors. The first DMA engine circuitry 728A may determine, based on the descriptors, that the first data packet is to be stored at memory location(s) in the buffer 710. The first DMA engine circuitry 728A may provide the first data packet to the first primary port 742. The first primary port 742 may provide the first data packet to the third secondary port 754. The third secondary port 754 may provide the first data packet to the PFE circuitry 708. The PFE circuitry 708 may store the first data packet in the buffer 710 based on the descriptors. In some examples, the buffer 710 may store data packets such as the first data packet, descriptors such as TX and/or RX descriptors, etc.

In some examples, the PFE circuitry 708 may be configured, programmed, etc., to forward data packets with addresses (e.g., IP addresses and/or IP ports, MAC addresses, etc.) within a predefined address range. For example, data packets that have addresses that fall within the predefined address range and are provided to the first primary port 742 and/or the second primary port 744 may be forwarded to the third secondary port 754 for storage in the buffer 710.

In the illustrated example of FIG. 7, the network interface circuitry 700 includes the PFE circuitry 708 to orchestrate a flow of data packets that need to be forwarded to a different destination than the network interface circuitry 700. In some examples, the PFE circuitry 708 generates TX descriptors that may be provided to at least one of the first DMA engine circuitry 728A or the second DMA engine circuitry 728B. In some such examples, the PFE circuitry 708 may generate the TX descriptors to include indirect address pointers for data packets not yet received by the network interface circuitry 700. Advantageously, the PFE circuitry 708 may generate the TX descriptors in advance of receiving a data packet for transmission to reduce latency in connection with receiving and transmitting the data packet. In some examples, the PFE circuitry 708 may generate a TX descriptor ring including the TX descriptors. For example, the TX descriptor ring may implement the TX descriptor ring 522 of FIG. 5. In some examples, the PFE circuitry 708 may update the TX descriptors with addresses pointing to data stored in the buffer 710 that is to be transmitted to different hardware destination(s).

In some examples, the PFE circuitry 708 generates RX descriptors that may be provided to at least one of the first DMA engine circuitry 728A or the second DMA engine circuitry 728B. In some such examples, the PFE circuitry 708 may generate the RX descriptors to include indirect address pointers for data packets not yet received by the network interface circuitry 700. Advantageously, the PFE circuitry 708 may generate the RX descriptors in advance of receiving a data packet for transmission to reduce latency in connection with receiving and transmitting the data packet. In some examples, the PFE circuitry 708 may generate a RX descriptor ring including the RX descriptors. For example, the RX descriptor ring may implement the RX descriptor ring 520 of FIG. 5. In some examples, the PFE circuitry 708 may update the RX descriptors with addresses pointing to memory location(s) in which received data packets are to be stored in the buffer 710.

In some examples, the PFE circuitry 708 configures first register(s) included in the first DMA engine circuitry 728A to start the first DMA engine circuitry 728A. For example, the PFE circuitry 708 may configure the first register(s) by the third primary port 746, the first secondary port 750, and the first secondary fabric interface circuitry 732A. In some examples, primary ports of the fabric circuitry 704, such as the third primary port 746, may be used to deliver control data to the first DMA engine circuitry 728A and/or the second DMA engine circuitry 728B.

In some examples, secondary ports of the fabric circuitry 704, such as the first secondary port 750 and the second secondary port 752, may be used to receive control data to the first DMA engine circuitry 728A and/or the second DMA engine circuitry 728B. For example, the PFE circuitry 708 may update an RX tail pointer in the first DMA engine circuitry 728A by the third primary port 746 and the first secondary port 750. The first secondary port 750 may provide the update of the RX tail pointer to the first secondary fabric interface circuitry 732A, which, in turn, may update the RX tail pointer stored in the first DMA engine circuitry 728A. In some examples, the PFE circuitry 708 may update a TX tail pointer in the second DMA engine circuitry 728B by the third primary port 746 and the second secondary port 752. The second secondary port 752 may provide the update of the TX tail pointer to the second secondary fabric interface circuitry 732B, which, in turn, may update the TX tail pointer stored in the second DMA engine circuitry 728B.

In some examples, the PFE circuitry 708 configures second register(s) included in the second DMA engine circuitry 728B to start the second DMA engine circuitry 728B. For example, the PFE circuitry 708 may configure the second register(s) by the third primary port 746, the second secondary port 752, and the second secondary fabric interface circuitry 732B.

In some examples, the PFE circuitry 708 may inform the first MAC circuitry 720A and/or the second MAC circuitry 720B about packet flow direction (e.g., forwarding a data packet from the first data interface circuitry 702A to the second data interface circuitry 702B or vice versa). In some examples, the PFE circuitry 708 may instruct the first MAC circuitry 720A and/or the second MAC circuitry 720B to control and/or otherwise utilize the first RX queue 726A and/or the first TX queue 73 8B for packet forwarding operations. In some examples, the PFE circuitry 708 may inform the first MAC circuitry 720A and/or the second MAC circuitry 720B that TX descriptors are generated without TX data (e.g., a data packet to be transmitted) being available. Advantageously, the PFE circuitry 708 may decouple TX descriptors and transmit data by generating the TX descriptors prior to data being received for transmission to a different destination than the network interface circuitry 700. Advantageously, the PFE circuitry 708 may reduce packet forwarding latency by decoupling the generation of the TX descriptors and receipt of data to be transmitted.

In some examples, the PFE circuitry 708 may configure the first MAC circuitry 720A and/or the second MAC circuitry 720B based on a daisy-chain configuration or mode of the network interface circuitry 700. For example, the PFE circuitry 708 may store a first value in a first register of the first daisy chain mode registers 734A and/or a first register of the second daisy chain mode registers 734B. In some such examples, the first value may correspond to and/or otherwise be indicative of a data forwarding mode, a daisy chain mode, etc., in which the network interface circuitry 700 is to operate. For example, in response to the first value of the first register of the first daisy chain mode registers 734A and/or the second daisy chain mode registers 734B indicating that a data packet is to be transmitted to a different destination (e.g., data interface circuitry different from the first data interface circuitry 702A and the second data interface circuitry 702B), the first data interface circuitry 702A may route a received data packet to the buffer 710 for storage and transmission by the second data interface circuitry 702B. In some examples, in response to a second value of the first register of the first daisy chain mode registers 734A and/or the second daisy chain mode registers 734B indicating that a data packet has a destination of the network interface circuitry 700, the first data interface circuitry 702A may route a received data packet to the memory 718 for storage and access by a host application.

While an example manner of implementing the network interface circuitry 104 of FIG. 1 is illustrated in FIG. 7, one or more of the elements, processes, and/or devices illustrated in FIG. 7 may be combined, divided, re-arranged, omitted, eliminated, and/or implemented in any other way. Further, the first data interface circuitry 702A, the second data interface circuitry 702B, the fabric circuitry 704, the bridge circuitry 706, the PFE circuitry 708, the buffer 710, the first MAC circuitry 720A, the first receive (RX) parser circuitry 722A, the first receive (RX) multiplexer circuitry 724A, the first RX queues 726A, 726B, the first DMA engine circuitry 728A, the first primary fabric interface circuitry 730A, the first secondary fabric interface circuitry 732A, the first daisy chain mode registers 734A, the first transmit (TX) multiplexer circuitry 736A, the first transmit (TX) queues 738A, the first GCL circuitry 740A, the second MAC circuitry 720B, the second receive (RX) parser circuitry 722B, the second receive (RX) multiplexer circuitry 724B, the second RX queues 726C, the second DMA engine circuitry 728B, the second primary fabric interface circuitry 730B, the second secondary fabric interface circuitry 732B, the second daisy chain mode registers 734B, the second transmit (TX) multiplexer circuitry 736B, the second transmit (TX) queues 738B, 738C, and the second GCL circuitry 740B, and/or, more generally, the example network interface circuitry 104 of FIG. 1, may be implemented by hardware, software, firmware, and/or any combination of hardware, software, and/or firmware. Thus, for example, any of the first data interface circuitry 702A, the second data interface circuitry 702B, the fabric circuitry 704, the bridge circuitry 706, the PFE circuitry 708, the buffer 710, the first MAC circuitry 720A, the first receive (RX) parser circuitry 722A, the first receive (RX) multiplexer circuitry 724A, the first RX queues 726A, 726B, the first DMA engine circuitry 728A, the first primary fabric interface circuitry 730A, the first secondary fabric interface circuitry 732A, the first daisy chain mode registers 734A, the first transmit (TX) multiplexer circuitry 736A, the first transmit (TX) queues 738A, the first GCL circuitry 740A, the second MAC circuitry 720B, the second receive (RX) parser circuitry 722B, the second receive (RX) multiplexer circuitry 724B, the second RX queues 726C, the second DMA engine circuitry 728B, the second primary fabric interface circuitry 730B, the second secondary fabric interface circuitry 732B, the second daisy chain mode registers 734B, the second transmit (TX) multiplexer circuitry 736B, the second transmit (TX) queues 738B, 738C, and the second GCL circuitry 740B, and/or, more generally, the example network interface circuitry 104 of FIG. 1, could be implemented by processor circuitry, analog circuit(s), digital circuit(s), logic circuit(s), programmable processor(s), programmable microcontroller(s), graphics processing unit(s) (GPU(s)), digital signal processor(s) (DSP(s)), application specific integrated circuit(s) (ASIC(s)), programmable logic device(s) (PLD(s)), and/or field programmable logic device(s) (FPLD(s)) such as Field Programmable Gate Arrays (FPGAs). When reading any of the apparatus or system claims of this patent to cover a purely software and/or firmware implementation, at least one of the first data interface circuitry 702A, the second data interface circuitry 702B, the fabric circuitry 704, the bridge circuitry 706, the PFE circuitry 708, the buffer 710, the first MAC circuitry 720A, the first receive (RX) parser circuitry 722A, the first receive (RX) multiplexer circuitry 724A, the first RX queues 726A, 726B, the first DMA engine circuitry 728A, the first primary fabric interface circuitry 730A, the first secondary fabric interface circuitry 732A, the first daisy chain mode registers 734A, the first transmit (TX) multiplexer circuitry 736A, the first transmit (TX) queues 738A, the first GCL circuitry 740A, the second MAC circuitry 720B, the second receive (RX) parser circuitry 722B, the second receive (RX) multiplexer circuitry 724B, the second RX queues 726C, the second DMA engine circuitry 728B, the second primary fabric interface circuitry 730B, the second secondary fabric interface circuitry 732B, the second daisy chain mode registers 734B, the second transmit (TX) multiplexer circuitry 736B, the second transmit (TX) queues 738B, 738C, and/or the second GCL circuitry 740B is/are hereby expressly defined to include a non-transitory computer readable storage device or storage disk such as a memory (e.g., flash memory, volatile memory, non-volatile memory, etc., and/or a combination thereof), a digital versatile disk (DVD), a compact disk (CD), a Blu-ray disk, etc., including the software and/or firmware. Further still, the example network interface circuitry 104 of FIG. 1 may include one or more elements, processes, and/or devices in addition to, or instead of, those illustrated in FIG. 7, and/or may include more than one of any or all of the illustrated elements, processes and devices.

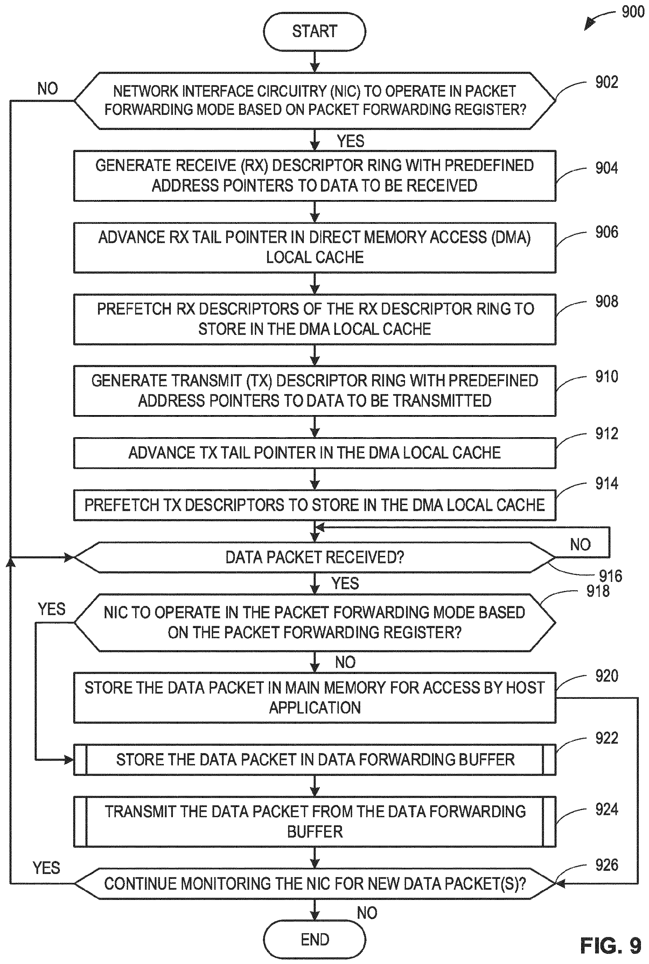

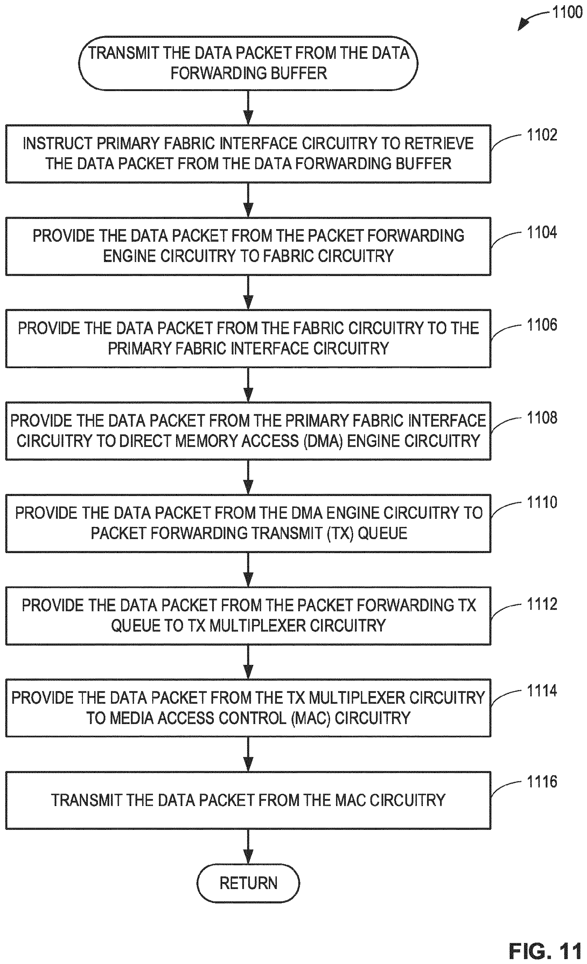

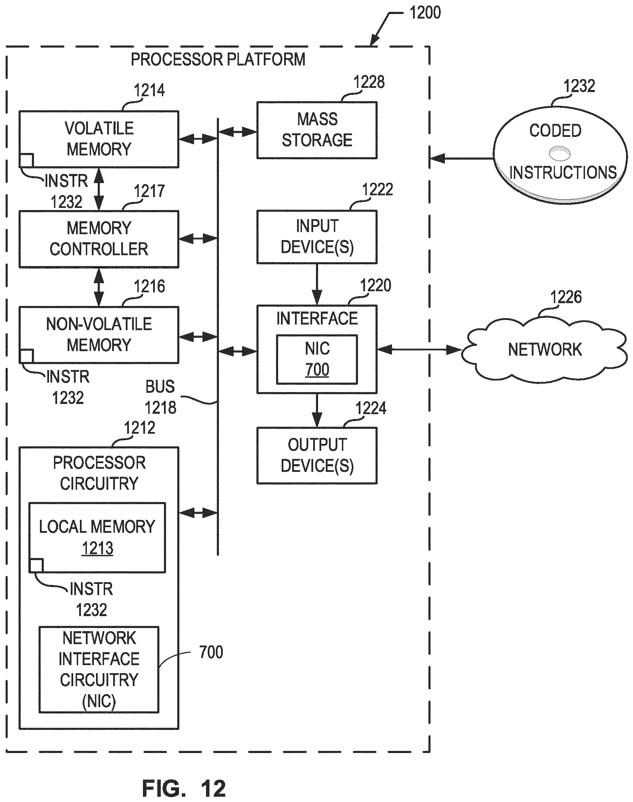

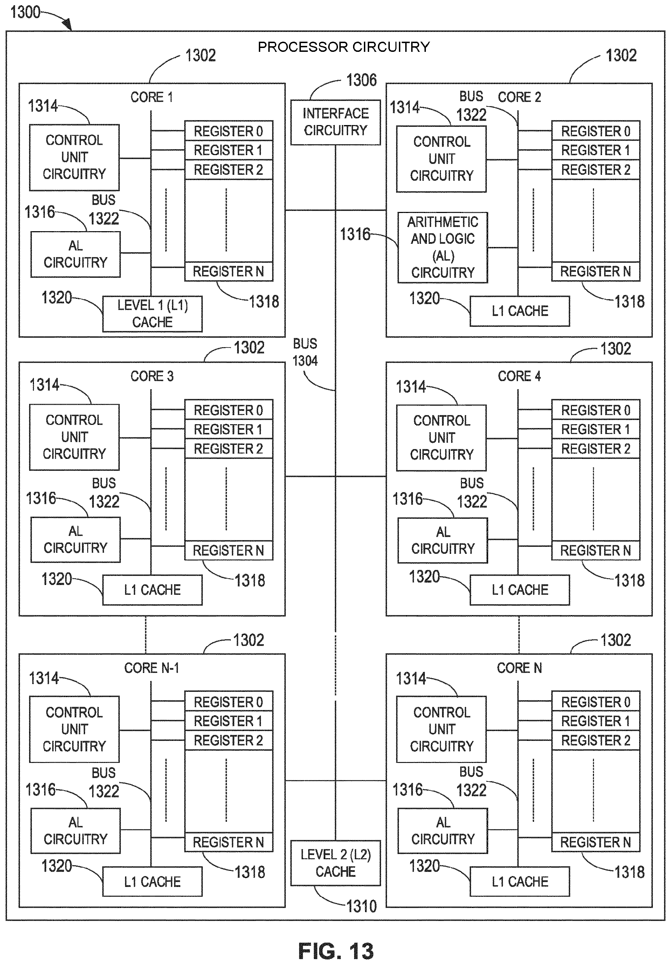

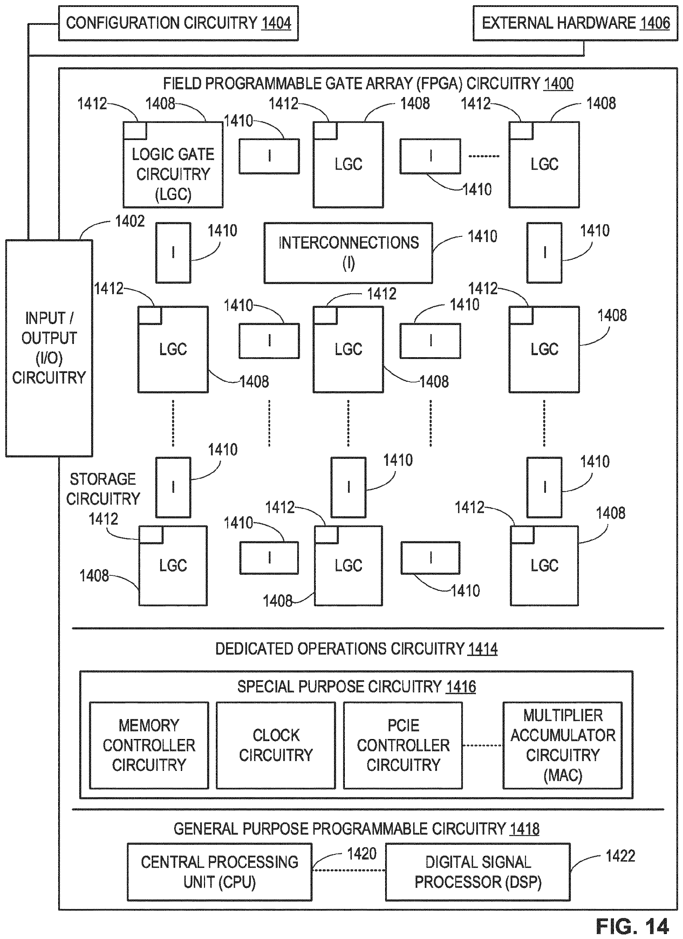

In some examples, the network interface circuitry 700 includes means for transmitting a data packet. For example, the means for transmitting may be implemented by the first data interface circuitry 702A and/or the second data interface circuitry 702B. In some examples, the first data interface circuitry 702A and/or the second data interface circuitry 702B may be implemented by machine executable instructions such as that implemented by at least block 924 of FIG. 9 and/or blocks 1102, 1104, 1106, 1108, 1110, 1112, 1114, 1116 of FIG. 11 executed by processor circuitry, which may be implemented by the example processor circuitry 1212 of FIG. 12, the interface circuitry 1220 of FIG. 12, the example processor circuitry 1300 of FIG. 13, and/or the example Field Programmable Gate Array (FPGA) circuitry 1400 of FIG. 14. In other examples, the first data interface circuitry 702A and/or the second data interface circuitry 702B is/are implemented by other hardware logic circuitry, hardware implemented state machines, and/or any other combination of hardware, software, and/or firmware. For example, the first data interface circuitry 702A and/or the second data interface circuitry 702B may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to perform the corresponding operation without executing software or firmware, but other structures are likewise appropriate.

In some examples, the means for transmitting includes means for means for interfacing with a data fabric, means for accessing memory, means for storing, means for selecting, means for controlling, and means for parsing. For example, the means for interfacing with a data fabric may be implemented by the first primary fabric interface circuitry 730A, the second primary fabric interface circuitry 730B, the first secondary fabric interface circuitry 732A, and/or the second fabric interface circuitry 732B. In some examples, the means for accessing memory may be implemented by the first DMA engine circuitry 728A and/or the second DMA engine circuitry 728B. In some examples, the means for storing may be implemented by the first RX queues 726A, 726B, the second RX queues 726C, the first TX queues 738A, the second TX queues 738B, the first daisy chain mode registers 734A, and/or the second daisy chain mode registers 734B. In some examples, the means for selecting may be implemented by the first RX multiplexer circuitry 724A, the second RX multiplexer circuitry 724B, the first TX multiplexer circuitry 736A, and/or the second TX multiplexer circuitry 736B. In some examples, the means for controlling may be implemented by the first MAC circuitry 720A and/or the second MAC circuitry 720B. In some examples, the means for parsing may be implemented by the first RX circuitry 722A and/or the second RX circuitry 722B.

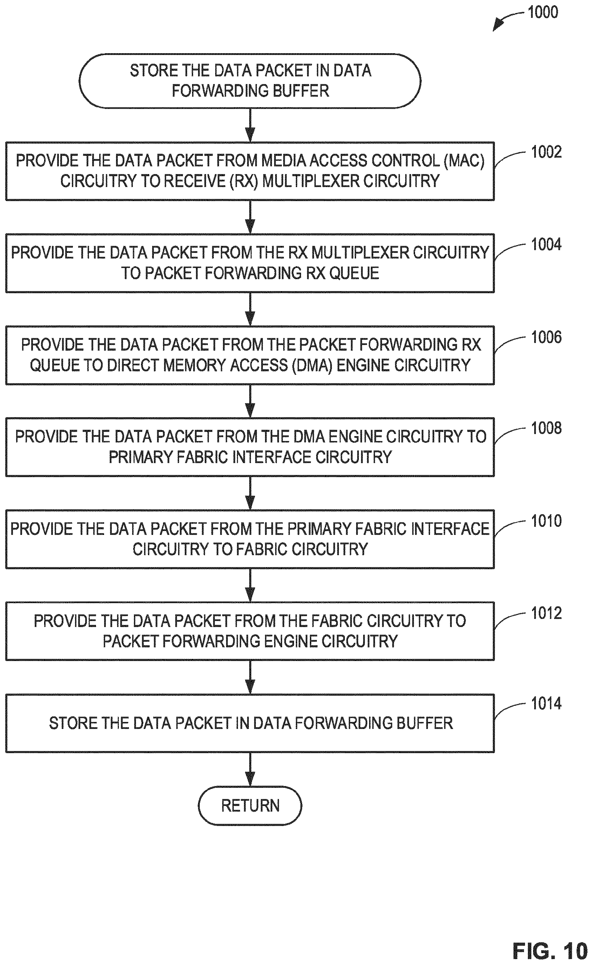

In some examples, the network interface circuitry 700 includes means for receiving a data packet. In some examples, the means for receiving is to identify the data packet to be forwarded to a network device by the means for transmitting. For example, the means for receiving may be implemented by the first data interface circuitry 702A and/or the second data interface circuitry 702B. In some examples, the first data interface circuitry 702A and/or the second data interface circuitry 702B may be implemented by machine executable instructions such as that implemented by at least block 922 of FIG. 9 and/or blocks 1002, 1004, 1006, 1008, 1010, 1012, 1014 of FIG. 10 executed by processor circuitry, which may be implemented by the example processor circuitry 1212 of FIG. 12, the interface circuitry 1220 of FIG. 12, the example processor circuitry 1300 of FIG. 13, and/or the example Field Programmable Gate Array (FPGA) circuitry 1400 of FIG. 14. In other examples, the first data interface circuitry 702A and/or the second data interface circuitry 702B is/are implemented by other hardware logic circuitry, hardware implemented state machines, and/or any other combination of hardware, software, and/or firmware. For example, the first data interface circuitry 702A and/or the second data interface circuitry 702B may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to perform the corresponding operation without executing software or firmware, but other structures are likewise appropriate.

In some examples, the network interface circuitry 700 includes means for storing at least one of a data packet, a descriptor, or a descriptor ring. For example, the means for storing may be implemented by the buffer 710. In some examples, the means for storing may be implemented by volatile memory and/or non-volatile memory.

In some examples, the network interface circuitry 700 includes means for bridging circuitry. For example, the means for bridging circuitry may be implemented by the bridge circuitry 706 of FIG. 7. In some examples, the network interface circuitry 700 includes means for interfacing with circuitry. For example, the means for interfacing with circuitry may be implemented by the fabric circuitry 704 of FIG. 7.

In some examples, the network interface circuitry 700 includes means for forwarding a data packet from means for receiving to means for transmitting. In some examples, the means for forwarding is to store the data packet in means for storing, and instruct the means for transmitting to transmit the data packet from the means for storing to a network device. For example, the means for forwarding may be implemented by the PFE circuitry 708 of FIG. 7. In some examples, the PFE circuitry 708 may be implemented by machine executable instructions such as that implemented by at least blocks 902, 904, 906, 908, 910, 912, 914, 922, 924 of FIG. 9, blocks 1012, 1014 of FIG. 10, and/or blocks 1102, 1104 of FIG. 11 executed by processor circuitry, which may be implemented by the example processor circuitry 1212 of FIG. 12, the interface circuitry 1220 of FIG. 12, the example processor circuitry 1300 of FIG. 13, and/or the example Field Programmable Gate Array (FPGA) circuitry 1400 of FIG. 14. In other examples, the PFE circuitry 708 is implemented by other hardware logic circuitry, hardware implemented state machines, and/or any other combination of hardware, software, and/or firmware. For example, the PFE circuitry 708 may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to perform the corresponding operation without executing software or firmware, but other structures are likewise appropriate.

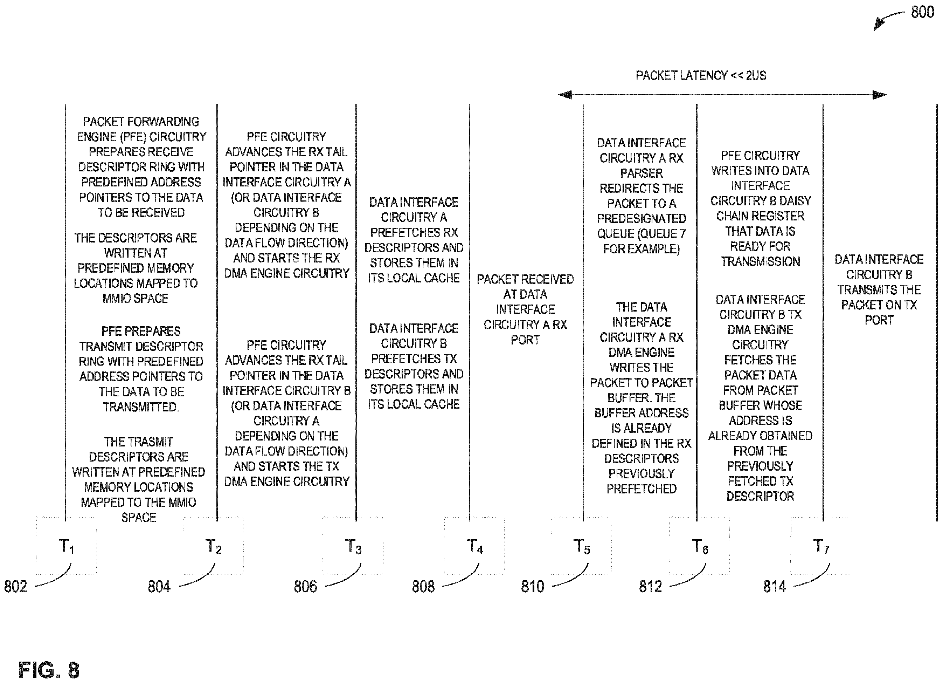

FIG. 8 is an example workflow 800 corresponding to example operation of the example network interface circuitry 104 of FIG. 1 and/or the network interface circuitry 700 of FIG. 7. In the workflow 800 of the illustrated example, at a first example time (T₁) 802, the PFE circuitry 708 of FIG. 7 may prepare a receive descriptor ring with predefined address pointers to data to be received by data interface circuitry, such as the first data interface circuitry 702A of FIG. 7. For example, the PFE circuitry 708 may generate and store the receive descriptor ring in the buffer 710. At the first time 802, the PFE circuitry 708 may write receive descriptors at predefined memory locations in the receive descriptor ring stored in the buffer 710. In some examples, the PFE circuitry 708 may map the memory locations to a memory space such as a memory-mapped I/O (MMIO) space.

At the first time 802, the PFE circuitry 708 may prepare a transmit descriptor ring with predefined address pointers to data to be transmitted by data interface circuitry, such as the second data interface circuitry 702B of FIG. 7. For example, the PFE circuitry 708 may generate and store the transmit descriptor ring in the buffer 710. At the first time 802, the PFE circuitry 708 may write transmit descriptors at predefined memory locations in the transmit descriptor ring stored in the buffer 710. In some examples, the PFE circuitry 708 may map the memory locations to a memory space such as an MMIO space.

At a second example time (T₂) 804 of the workflow 800, the PFE circuitry 708 may advance and/or otherwise increment a receive (RX) tail pointer stored in the data interface circuitry such as stored in the first DMA engine circuitry 728A of FIG. 7. In some such examples, in response to advancing the RX tail pointer in the first DMA engine circuitry 728A, the PFE circuitry 708 may initialize the RX DMA associated with the first DMA engine circuitry 728A.

At the second time 804 of the workflow 800, the PFE circuitry 708 may advance and/or otherwise increment a transmit (TX) tail pointer stored in the data interface circuitry such as stored in the second DMA engine circuitry 728B of FIG. 7. In some such examples, in response to advancing the TX tail pointer in the second DMA engine circuitry 728B, the PFE circuitry 708 may initialize the TX DMA associated with the second DMA engine circuitry 728B.

At a third example time (T₃) 806 of the workflow 800, the data interface circuitry may prefetch descriptors from the buffer 710 and store the descriptors in local cache. For example, the first DMA engine circuitry 728A may obtain RX descriptors from the buffer 710 and store the RX descriptors in cache memory of the first DMA engine circuitry 728A. In some such examples, the first DMA engine circuitry 728A may obtain the RX descriptors by the first primary fabric interface circuitry 730A, the first primary port 742, the third secondary port 754, and the PFE circuitry 708. In some examples, at the third time 806, the second DMA engine circuitry 728B may obtain TX descriptors from the buffer 710 and store the TX descriptors in cache memory of the second DMA engine circuitry 728B. In some such examples, the second DMA engine circuitry 728B may obtain the TX descriptors by the second primary fabric interface circuitry 730B, the second primary port 744, the third secondary port 754, and the PFE circuitry 708.

At a fourth example time (T₄) 808 of the workflow 800, a first data packet is received at an RX port of the data interface circuitry. For example, the first physical layer 712 may received the first data packet and deliver the first data packet by the RX0 port to the first MAC circuitry 720A.

At a fifth example time (T₅) 810 of the workflow 800, the first RX parser circuitry 722A may redirect the first data packet to a predesignated packet forwarding queue, such as the first RX queue 726A of FIG. 7. At the fifth time 810, in response to delivering the first data packet to the first RX queue 726A, the first DMA engine circuitry 728A may write the first data packet to the buffer 710 by the first primary fabric interface circuitry 730A, the first primary port 742, the third secondary port 754, and the PFE circuitry 708. Advantageously, the first DMA engine circuitry 728A may prefetch the address of the buffer 710 at which to store the first data packet, which may reduce latency associated with forwarding the first data packet to the second data interface circuitry 702B.

At a sixth example time (T₆) 812 of the workflow 800, the PFE circuitry 708 may write into a second register of the second daisy chain mode registers 734B a value (e.g., a value of 1, a logic value **of** '**1',** etc., or any other value) that indicates data is ready and/or otherwise available for the second data interface circuitry 704B to transmit to another network device. At the sixth time 812, the second DMA engine circuitry 728B may fetch the first data packet from the buffer 710. Advantageously, the second DMA engine circuitry 728B may prefetch the address of the buffer 710 at which to retrieve the first data packet, which may reduce latency associated with forwarding the first data packet from the second data interface circuitry 702B.

At a seventh example time (T₇) 814 of the workflow 800, the second data interface circuitry 702B may transmit the first data packet to a network device by the TX1 port from the second MAC circuitry 720B to the second physical layer 714. Advantageously, in this example, the packet latency associated with receiving the first data packet from a first network device at the first time 808 and transmitting the first data packet to a second network device at the seventh time 814 in a daisy-chain configuration is less (e.g., substantially less) than 2 us. Advantageously, in this example, the network interface circuitry 700 may implement data forwarding with reduced latency with respect to the first system 200 of FIG. 2, the second system 300 of FIG. 3, and/or the third system 400 of FIG. 4.

Flowcharts representative of example hardware logic circuitry, machine readable instructions, hardware implemented state machines, and/or any combination thereof for implementing the example network interface circuitry 104 of FIG. 1 and/or the example network interface circuitry 700 of FIG. 7 are shown in FIGS. 9-11. The machine readable instructions may be one or more executable programs or portion(s) of an executable program for execution by processor circuitry, such as the processor circuitry 1212 shown in the example processor platform 1200 discussed below in connection with FIG. 12, the example interface circuitry 1220 discussed below in connection with FIG. 12, and/or the example processor circuitry discussed below in connection with FIGS. 13 and/or 14. The program may be embodied in software stored on one or more non-transitory computer readable storage media such as a CD, a floppy disk, a HDD, a DVD, a Blu-ray disk, a volatile memory (e.g., Random Access Memory (RAM) of any type, etc.), or a non-volatile memory (e.g., FLASH memory, an HDD, etc.) associated with processor circuitry located in one or more hardware devices, but the entire program and/or parts thereof could alternatively be executed by one or more hardware devices other than the processor circuitry and/or embodied in firmware or dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a user) or an intermediate client hardware device (e.g., a radio access network (RAN) gateway that may facilitate communication between a server and an endpoint client hardware device). Similarly, the non-transitory computer readable storage media may include one or more mediums located in one or more hardware devices. Further, although the example program is described with reference to the flowcharts illustrated in FIGS. 9-11, many other methods of implementing the example network interface circuitry 104 of FIG. 1 and/or the example network interface circuitry 700 of FIG. 7 may alternatively be used. For example, the order of execution of the blocks may be changed, and/or some of the blocks described may be changed, eliminated, or combined. Additionally or alternatively, any or all of the blocks may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more hardware devices (e.g., a single-core processor (e.g., a single core central processor unit (CPU)), a multi-core processor (e.g., a multi-core CPU), etc.) in a single machine, multiple processors distributed across multiple servers of a server rack, multiple processors distributed across one or more server racks, a CPU and/or a FPGA located in the same package (e.g., the same integrated circuit (IC) package or in two or more separate housings, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., as portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of machine executable instructions that implement one or more operations that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc., in order to execute the machine readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 9-11 may be implemented using executable instructions (e.g., computer and/or machine readable instructions) stored on one or more non-transitory computer and/or machine readable media such as optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms non-transitory computer readable medium and non-transitory computer readable storage medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements or method actions may be implemented by, e.g., the same entity or object. Additionally, although individual features may be included in different examples or claims, these may possibly be combined, and the inclusion in different examples or claims does not imply that a combination of features is not feasible and/or advantageous.

FIG. 9 is a flowchart representative of example machine readable instructions and/or example operations 900 that may be executed and/or instantiated by processor circuitry and/or network interface circuitry to implement packet forwarding for daisy chaining of network devices. For example, the machine readable instructions and/or operations 900 of FIG. 9 may be executed and/or instantiated by the network interface circuitry 104 of FIG. 1 and/or the network interface circuitry 700 of FIG. 7. The machine readable instructions and/or operations 900 of FIG. 9 begin at block 902, at which the network interface circuitry 700 of FIG. 7 may determine whether network interface circuitry (NIC) is to operate in a packet forwarding mode based on a packet forwarding register. For example, the PFE circuitry 708 (FIG. 7) may set a value of a first register of the first daisy chain mode registers 734A (FIG. 7) and a first register of the second daisy chain mode registers 734B (FIG. 7) to indicate that a respective one of the first data interface circuitry 702A and the second data interface circuitry 702B is/are to operate in a packet forwarding mode to implement a daisy-chain network topology. In some such examples, the first DMA engine circuitry 728A may poll the value of the first register of the first daisy chain mode registers 734A to determine that the value indicates that the first data interface circuitry 702A is to operate in the packet forwarding mode. In some examples, the first DMA engine circuitry 728A may poll the value of the first register of the first daisy chain mode registers 734A to determine that the value indicates that the first data interface circuitry 702A is not to operate in the packet forwarding mode and instead is to operate in a non-packet forwarding mode (e.g., a mode to cause storage of data packets having a destination of the network interface circuitry 700 in the memory 718 (FIG. 7)).

If, at block 902, the network interface circuitry 700 determines that the NIC is not to operate in the packet forwarding mode based on the packet forwarding register, control proceeds to block 916 to determine whether a data packet is received. If, at block 902, the network interface circuitry 700 determines that the NIC is to operate in the packet forwarding mode based on the packet forwarding register, then, at block 904, the network interface circuitry 700 may generate a receive (RX) descriptor ring with predefined address pointers to data to be received. For example, the PFE circuitry 708 may generate an RX descriptor ring and store the RX descriptor ring in the buffer 710 (FIG. 7). In some such examples, the PFE circuitry 708 may generate RX descriptors associated with the RX descriptor ring and store the RX descriptors in the buffer 710.

At block 906, the network interface circuitry 700 may advance an RX tail pointer in direct memory access (DMA) local cache. For example, the PFE circuitry 708 may advance and/or otherwise increment an RX tail pointer stored in cache memory of the first DMA engine circuitry 728A (FIG. 7).

At block 908, the network interface circuitry 700 may prefetch RX descriptors of the RX descriptor ring to store in the DMA local cache. For example, the first DMA engine circuitry 728A may obtain the RX descriptors from the buffer 710 prior to data packet(s) being received by the network interface circuitry 700.

At block 910, the network interface circuitry 700 may generate a transmit (TX) descriptor ring with predefined address pointers to data to be transmitted. For example, the PFE circuitry 708 may generate a TX descriptor ring and store the TX descriptor ring in the buffer 710. In some such examples, the PFE circuitry 708 may generate TX descriptors associated with the TX descriptor ring and store the TX descriptors in the buffer 710.

At block 912, the network interface circuitry 700 may advance a TX tail pointer in the DMA local cache. For example, the PFE circuitry 708 may advance and/or otherwise increment a TX tail pointer stored in cache memory of the second DMA engine circuitry 728B (FIG. 7).

At block 914, the network interface circuitry 700 may prefetch TX descriptors of the TX descriptor ring to store in the DMA local cache. For example, the second DMA engine circuitry 728B may obtain the TX descriptors from the buffer 710 prior to data packet(s) being received by the network interface circuitry 700.

At block 916, the network interface circuitry 700 may determine whether a data packet is received. For example, the first MAC circuitry 720A may receive a first data packet from a network device (e.g., one of the external computing systems 128, the I/O device 142, etc., of FIG. 1) by the first physical layer 712 (FIG. 7). If, at block 916, the network interface circuitry 700 determines that a data packet is not received, control waits until a data packet is received. If, at block 916, the network interface circuitry 700 determines that a data packet is received, then, at block 918, the network interface circuitry 700 may determine whether the NIC is to operate in the packet forwarding mode based on the packet forwarding register. For example, the first MAC circuitry 720A, the first RX parser circuitry 722A, the first DMA engine circuitry 728A, and/or, more generally, the first data interface circuitry 702A, may determine to forward data packets based on a daisy-chain network topology, and the determination may be based on a value stored in the first register of the first daisy chain mode registers 734A.

If, at block 918, the network interface circuitry 700 determines that the NIC is not to operate in the packet forwarding mode based on the packet forwarding register, then, at block 920, the network interface circuitry 700 may store the data packet in main memory for access by a host application. For example, the first MAC circuitry 720A (FIG. 7) may deliver the first data packet to the second RX queue 726B (FIG. 7). The second RX queue 726B may deliver the first data packet to the first DMA engine circuitry 728A. The first DMA engine circuitry 728A may deliver the first data packet to the first primary port 742 (FIG. 7). The first primary port 742 may deliver the first data packet to the fourth secondary port 756 (FIG. 7). The fourth secondary port 756 may deliver the first data packet to the bridge circuitry 706 (FIG. 7). The bridge circuitry 706 may deliver the first data packet to the main memory 718 (FIG. 7) by the interface(s) 716 (FIG. 7). In some examples, a host application, such as the host application 122 (FIG. 1) may access data of the first data packet from the main memory 718. In response to storing the data packet in the main memory for access by the host application at block 920, control proceeds to block 926 to determine whether to continue monitoring the NIC for new data packet(s).

If, at block 918, the network interface circuitry 700 determines that the NIC is to operate in the packet forwarding mode based on the packet forwarding register, then, at block 922, the network interface circuitry 700 may store the data packet in a data forwarding buffer. For example, the first DMA engine circuitry 728A may deliver the first data packet from the first RX queue 726A, which may be identified as a queue to effectuate packet forwarding of data packets, to the buffer 710. An example process that may be executed to implement block 922 is described below in connection with FIG. 10.

At block 924, the network interface circuitry 700 may transmit the data packet from the data forwarding buffer. For example, the second DMA engine circuitry 728B may deliver the first data packet from the buffer 710 to the first TX queue 738B, which may be identified as a queue to effectuate packet forwarding of data packets, to the second MAC circuitry 720B for transmission to another network device, a different destination, etc. An example process that may be executed to implement block 924 is described below in connection with FIG. 11.

At block 926, the network interface circuitry 700 may determine whether to continue monitoring the NIC for new data packet(s). For example, the first MAC circuitry 720A may determine that another data packet has been received by the first physical layer 712. If, at block 926, the network interface circuitry 700 determines to continue monitoring the NIC for new data packet(s), control returns to block 916 to determine whether another data packet has been received, otherwise the machine readable instructions and/or operations 900 of FIG. 9 conclude.

FIG. 10 is a flowchart representative of example machine readable instructions and/or example operations 1000 that may be executed and/or instantiated by processor circuitry and/or network interface circuitry to store a data packet in a data forwarding buffer. For example, the machine readable instructions and/or operations 1000 of FIG. 10 may be executed and/or instantiated by the network interface circuitry 104 of FIG. 1 and/or the network interface circuitry 700 of FIG. 7. In some examples, the machine readable instructions and/or operations 1000 of FIG. 10 may implement block 922 of the machine readable instructions and/or operations 900 of FIG. 9. The machine readable instructions and/or operations 1000 of FIG. 10 begin at block 1002, at which the network interface circuitry 700 of FIG. 7 may provide the data packet from media access control (MAC) circuitry to receive (RX) multiplexer circuitry. For example, the first MAC circuitry 720A (FIG. 7) may provide the first data packet to the first RX multiplexer circuitry 724A (FIG. 7). In some such examples, the first RX parser circuitry 722A (FIG. 7) may obtain the first data packet, or portion(s) (e.g., a header, a payload, etc.) thereof, from the first MAC circuitry 720A.

At block 1004, the network interface circuitry 700 may provide the data packet from the RX multiplexer circuitry to a packet forwarding RX queue. For example, in response to a determination that the network interface circuitry 700 is to operate in the packet forwarding mode based on a value of the first register of the first daisy chain mode registers 734A (FIG. 7), the first RX parser circuitry 722A may determine that the first data packet has an address that comports, complies, and/or otherwise invokes a filtering rule. In some such examples, the first RX parser circuitry 722A may determine that a destination IP address, a destination IP port, a destination MAC address, etc., and/or a combination thereof, of the first data packet (e.g., included in a header of the first data packet) is within an address range (e.g., a destination address range) indicated by a filter rule that the addresses within the address range are selected for packet forwarding. In response to a determination that the destination IP address, a destination IP port, a destination MAC address, etc., is within the address range, the first RX parser circuitry 722A may instruct the first RX multiplexer circuitry 724A to deliver the first data packet from the first MAC circuitry 720A to the first RX queue 726A (FIG. 7). Alternatively, the first RX parser circuitry 722A may determine that the destination IP address, the destination IP port, the destination MAC address, etc., and/or a combination thereof, is not within the address range identified for packet forwarding. In some such examples, the first RX parser circuitry 722A may determine that the destination IP address, the destination IP port, the destination MAC address, etc., corresponds to the network interface circuitry 700 and thereby may identify that the destination of the first data packet is the network interface circuitry 700 and is not to be forwarded to another network device.

At block 1006, the network interface circuitry 700 may provide the data packet from the packet forwarding RX queue to direct memory access (DMA) engine circuitry. For example, the first RX queue 726A may provide, transmit, and/or otherwise deliver the first data packet to the first DMA engine circuitry 728A (FIG. 7).

At block 1008, the network interface circuitry 700 may provide the data packet from the DMA engine circuitry to primary fabric interface circuitry. For example, the first DMA engine circuitry 728A may provide the first data packet to the first primary fabric interface circuitry 730A (FIG. 7).

At block 1010, the network interface circuitry 700 may provide the data packet from the primary fabric interface circuitry to fabric circuitry. For example, the first primary fabric interface circuitry 730A may deliver the first data packet to the first primary port 742 (FIG. 7) of the fabric circuitry 704 (FIG. 7).

At block 1012, the network interface circuitry 700 may provide the data packet from the fabric circuitry to packet forwarding engine circuitry. For example, the first primary port 742 may provide the first data packet to the third secondary port 754 (FIG. 7), which, in turn, may provide the first data packet to the PFE circuitry 708 (FIG. 7).

At block 1014, the network interface circuitry 700 may store the data packet in a data forwarding buffer. For example, the PFE circuitry 708 may store the first data packet at an address associated with at least one of the RX descriptor ring or the TX descriptor ring, which may be stored in the buffer 710. In some such examples, the PFE circuitry 708 may advance and/or otherwise update a TX tail pointer in the second DMA engine circuitry 728B, which may inform the second DMA engine circuitry 728B that the first data packet is ready for packet forwarding. In response to storing the data packet in the data forwarding buffer at block 1014, the machine readable instructions and/or example operations 1000 of FIG. 10 conclude. For example, the machine readable instructions and/or example operations 1000 of FIG. 10 may return to block 924 of the machine readable instructions and/or example operations 900 of FIG. 9 to transmit the data packet from the data forwarding buffer.

FIG. 11 is a flowchart representative of example machine readable instructions and/or example operations 1100 that may be executed and/or instantiated by processor circuitry and/or network interface circuitry to transmit a data packet from the data forwarding buffer. For example, the machine readable instructions and/or operations 1100 of FIG. 11 may be executed and/or instantiated by the network interface circuitry 104 of FIG. 1 and/or the network interface circuitry 700 of FIG. 7. In some examples, the machine readable instructions and/or operations 1100 of FIG. 11 may implement block 924 of the machine readable instructions and/or operations 900 of FIG. 9. The machine readable instructions and/or operations 1100 of FIG. 11 begin at block 1102, at which the network interface circuitry 700 of FIG. 7 may instruct primary fabric interface circuitry to retrieve the data packet from the data forwarding buffer. For example, in response to an identification of a TX tail pointer in the second DMA engine circuitry 728B (FIG. 7) being advanced, the second DMA engine circuitry 728B may instruct the second primary fabric interface circuitry 730B (FIG. 7) to obtain the first data packet from the buffer 710 by the fabric circuitry 704 (FIG. 7). In some such examples, the second primary fabric interface circuitry 730B may transmit a request for the first data packet to the second primary port 744 (FIG. 7), which, in turn, may provide the request to the third secondary port 754 (FIG. 7) of the fabric circuitry 704.

At block 1104, the network interface circuitry 700 may provide the data packet from the packet forwarding engine circuitry to the fabric circuitry. For example, the PFE circuitry 708 (FIG. 7) may obtain the first data packet from the buffer 710. The PFE circuitry 708 may provide the first data packet to the third secondary port 754.

At block 1106, the network interface circuitry 700 may provide the data packet from the fabric circuitry to the primary fabric interface circuitry. For example, the third secondary port 754 may provide the first data packet to the second primary port 744. The second primary port 744 may provide the first data packet to the second primary fabric interface circuitry 730B.

At block 1108, the network interface circuitry 700 may provide the data packet from the primary fabric interface circuitry to direct memory access (DMA) engine circuitry. For example, the second primary fabric interface circuitry 730B may deliver and/or otherwise transmit the first data packet to the second DMA engine circuitry 728B.

At block 1110, the network interface circuitry 700 may provide the data packet from the DMA engine circuitry to a packet forwarding TX queue. For example, the second DMA engine circuitry 728B may deliver the first data packet to the first TX queue 738B (FIG. 7), which may be designated and/or otherwise associated with the packet forwarding mode, packet forwarding operation(s), etc.

At block 1112, the network interface circuitry 700 may provide the data packet from the packet forwarding TX queue to TX multiplexer circuitry. For example, the first TX queue 738B may provide the first data packet to the second TX multiplexer circuitry 736B (FIG. 7).

At block 1114, the network interface circuitry 700 may provide the data packet from the TX multiplexer circuitry to media access control (MAC) circuitry. For example, the second TX multiplexer circuitry 736B may provide the first data packet to the second MAC circuitry 720B (FIG. 7).

At block 1116, the network interface circuitry 700 may transmit the data packet from the MAC circuitry. For example, the second MAC circuitry 720B may transmit the first data packet to another network device. In response to transmitting the data packet from the MAC circuitry at block 1116, the machine readable instructions and/or example operations 1100 of FIG. 11 conclude. For example, the machine readable instructions and/or example operations 1100 of FIG. 11 may return to block 926 of the machine readable instructions and/or example operations 900 of FIG. 9 to determine whether to continue monitoring the NIC for new data packet(s).

FIG. 12 is a block diagram of an example processor platform 1200 structured to execute and/or instantiate the machine readable instructions and/or operations of FIGS. 9-11 to implement the network interface circuitry 104 of FIG. 1 and/or the network interface circuitry 700 of FIG. 7. The processor platform 1200 can be, for example, a server, a personal computer, a workstation, a self-learning machine (e.g., a neural network), an Internet appliance, a DVD player, a CD player, a digital video recorder, a Blu-ray player, a gaming console, a personal video recorder, a set top box, or any other type of computing device.

The processor platform 1200 of the illustrated example includes processor circuitry 1212. The processor circuitry 1212 of the illustrated example is hardware. For example, the processor circuitry 1212 can be implemented by one or more integrated circuits, logic circuits, FPGAs microprocessors, CPUs, GPUs, DSPs, and/or microcontrollers from any desired family or manufacturer. The processor circuitry 1212 may be implemented by one or more semiconductor based (e.g., silicon based) devices. In this example, the processor circuitry 1212 implements the network interface circuitry 700 of FIG. 7.

The processor circuitry 1212 of the illustrated example includes a local memory 1213 (e.g., a cache, registers, etc.). The processor circuitry 1212 of the illustrated example is in communication with a main memory including a volatile memory 1214 and a non-volatile memory 1216 by a bus 1218. The volatile memory 1214 may be implemented by SDRAM, DRAM, RDRAM^{®}, and/or any other type of RAM device. The non-volatile memory 1216 may be implemented by flash memory and/or any other desired type of memory device. Access to the main memory 1214, 1216 of the illustrated example is controlled by a memory controller 1217.

The processor platform 1200 of the illustrated example also includes interface circuitry 1220. The interface circuitry 1220 may be implemented by hardware in accordance with any type of interface standard, such as an Ethernet interface, a universal serial bus (USB) interface, a Bluetooth^{®} interface, a near field communication (NFC) interface, a PCI interface, and/or a PCIe interface.

In the illustrated example, one or more input devices 1222 are connected to the interface circuitry 1220. The input device(s) 1222 permit(s) a user to enter data and/or commands into the processor circuitry 1212. The input device(s) 1222 can be implemented by, for example, an audio sensor, a microphone, a camera (still or video), a keyboard, a button, a mouse, a touchscreen, a track-pad, a trackball, an isopoint device, and/or a voice recognition system.

One or more output devices 1224 are also connected to the interface circuitry 1220 of the illustrated example. The output devices 1224 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 1220 of the illustrated example, thus, typically includes a graphics driver card, a graphics driver chip, and/or graphics processor circuitry such as a GPU.

The interface circuitry 1220 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1226. The communication can be by, for example, an Ethernet connection, a digital subscriber line (DSL) connection, a telephone line connection, a coaxial cable system, a satellite system, a line-of-site wireless system, a cellular telephone system, an optical connection, etc. In this example, the interface circuitry 1220 implements the network interface circuitry 700 of FIG. 7.

The processor platform 1200 of the illustrated example also includes one or more mass storage devices 1228 to store software and/or data. Examples of such mass storage devices 1228 include magnetic storage devices, optical storage devices, floppy disk drives, HDDs, CDs, Blu-ray disk drives, redundant array of independent disks (RAID) systems, solid state storage devices such as flash memory devices, and DVD drives.

The machine executable instructions 1232, which may be implemented by the machine readable instructions and/or operations of FIGS. 9-11, may be stored in the mass storage device 1228, in the volatile memory 1214, in the non-volatile memory 1216, and/or on a removable non-transitory computer readable storage medium such as a CD or DVD.

FIG. 13 is a block diagram of an example implementation of the processor circuitry 1212 of FIG. 12. In this example, the processor circuitry 1212 of FIG. 12 is implemented by a microprocessor 1300. For example, the microprocessor 1300 may implement multi-core hardware circuitry such as a CPU, a DSP, a GPU, an XPU, etc. Although it may include any number of example cores 1302 (e.g., 1 core), the microprocessor 1300 of this example is a multi-core semiconductor device including N cores. The cores 1302 of the microprocessor 1300 may operate independently or may cooperate to execute machine readable instructions. For example, machine code corresponding to a firmware program, an embedded software program, or a software program may be executed by one of the cores 1302 or may be executed by multiple ones of the cores 1302 at the same or different times. In some examples, the machine code corresponding to the firmware program, the embedded software program, or the software program is split into threads and executed in parallel by two or more of the cores 1302. The software program may correspond to a portion or all of the machine readable instructions and/or operations represented by the flowcharts of FIGS. 9-11.

The cores 1302 may communicate by an example bus 1304. In some examples, the bus 1304 may implement a communication bus to effectuate communication associated with one(s) of the cores 1302. For example, the bus 1304 may implement at least one of an I2C bus, a SPI bus, a PCI bus, or a PCIe bus. Additionally or alternatively, the bus 1304 may implement any other type of computing or electrical bus. The cores 1302 may obtain data, instructions, and/or signals from one or more external devices by example interface circuitry 1306. The cores 1302 may output data, instructions, and/or signals to the one or more external devices by the interface circuitry 1306. Although the cores 1302 of this example include example local memory 1320 (e.g., Level 1 (LI) cache that may be split into an L1 data cache and an L1 instruction cache), the microprocessor 1300 also includes example shared memory 1310 that may be shared by the cores (e.g., Level 2 (L2_ cache)) for high-speed access to data and/or instructions. Data and/or instructions may be transferred (e.g., shared) by writing to and/or reading from the shared memory 1310. The local memory 1320 of each of the cores 1302 and the shared memory 1310 may be part of a hierarchy of storage devices including multiple levels of cache memory and the main memory (e.g., the main memory 718 of FIG. 7, the main memory 1214, 1216 of FIG. 12, etc.). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1302 may be referred to as a CPU, DSP, GPU, etc., or any other type of hardware circuitry. Each core 1302 includes control unit circuitry 1314, arithmetic and logic (AL) circuitry (sometimes referred to as an ALU) 1316, a plurality of registers 1318, the L1 cache 1320, and an example bus 1322. Other structures may be present. For example, each core 1302 may include vector unit circuitry, single instruction multiple data (SIMD) unit circuitry, load/store unit (LSU) circuitry, branch/jump unit circuitry, floating-point unit (FPU) circuitry, etc. The control unit circuitry 1314 includes semiconductor-based circuits structured to control (e.g., coordinate) data movement within the corresponding core 1302. The AL circuitry 1316 includes semiconductor-based circuits structured to perform one or more mathematic and/or logic operations on the data within the corresponding core 1302. The AL circuitry 1316 of some examples performs integer based operations. In other examples, the AL circuitry 1316 also performs floating point operations. In yet other examples, the AL circuitry 1316 may include first AL circuitry that performs integer based operations and second AL circuitry that performs floating point operations. In some examples, the AL circuitry 1316 may be referred to as an Arithmetic Logic Unit (ALU). The registers 1318 are semiconductor-based structures to store data and/or instructions such as results of one or more of the operations performed by the AL circuitry 1316 of the corresponding core 1302. For example, the registers 1318 may include vector register(s), SIMD register(s), general purpose register(s), flag register(s), segment register(s), machine specific register(s), instruction pointer register(s), control register(s), debug register(s), memory management register(s), machine check register(s), etc. The registers 1318 may be arranged in a bank as shown in FIG. 13. Alternatively, the registers 1318 may be organized in any other arrangement, format, or structure including distributed throughout the core 1302 to shorten access time. The bus 1322 may implement at least one of an I2C bus, a SPI bus, a PCI bus, or a PCIe bus

Each core 1302 and/or, more generally, the microprocessor 1300 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1300 is a semiconductor device fabricated to include many transistors interconnected to implement the structures described above in one or more integrated circuits (ICs) contained in one or more packages. The processor circuitry may include and/or cooperate with one or more accelerators. In some examples, accelerators are implemented by logic circuitry to perform certain tasks more quickly and/or efficiently than can be done by a general purpose processor. Examples of accelerators include ASICs and FPGAs such as those discussed herein. A GPU or other programmable device can also be an accelerator. Accelerators may be on-board the processor circuitry, in the same chip package as the processor circuitry and/or in one or more separate packages from the processor circuitry.

FIG. 14 is a block diagram of another example implementation of the processor circuitry 1212 of FIG. 12. In this example, the processor circuitry 1212 is implemented by FPGA circuitry 1400. The FPGA circuitry 1400 can be used, for example, to perform operations that could otherwise be performed by the example microprocessor 1300 of FIG. 13 executing corresponding machine readable instructions. However, once configured, the FPGA circuitry 1400 instantiates the machine readable instructions in hardware and, thus, can often execute the operations faster than they could be performed by a general purpose microprocessor executing the corresponding software.

More specifically, in contrast to the microprocessor 1300 of FIG. 13 described above (which is a general purpose device that may be programmed to execute some or all of the machine readable instructions and/or operations represented by the flowcharts of FIGS. 9-11 but whose interconnections and logic circuitry are fixed once fabricated), the FPGA circuitry 1400 of the example of FIG. 14 includes interconnections and logic circuitry that may be configured and/or interconnected in different ways after fabrication to instantiate, for example, some or all of the machine readable instructions and/or operations represented by the flowcharts of FIGS. 9-11. In particular, the FPGA circuitry 1400 may be thought of as an array of logic gates, interconnections, and switches. The switches can be programmed to change how the logic gates are interconnected by the interconnections, effectively forming one or more dedicated logic circuits (unless and until the FPGA circuitry 1400 is reprogrammed). The configured logic circuits enable the logic gates to cooperate in different ways to perform different operations on data received by input circuitry. Those operations may correspond to some or all of the software represented by the flowcharts of FIGS. 9-11. As such, the FPGA circuitry 1400 may be structured to effectively instantiate some or all of the machine readable instructions and/or operations of the flowcharts of FIGS. 9-11 as dedicated logic circuits to perform the operations corresponding to those software instructions in a dedicated manner analogous to an ASIC. Therefore, the FPGA circuitry 1400 may perform the operations corresponding to the some or all of the machine readable instructions and/or operations of FIGS. 9-11 faster than the general purpose microprocessor can execute the same.

In the example of FIG. 14, the FPGA circuitry 1400 is structured to be programmed (and/or reprogrammed one or more times) by an end user by a hardware description language (HDL) such as Verilog. The FPGA circuitry 1400 of FIG. 14, includes example input/output (I/O) circuitry 1402 to obtain and/or output data to/from example configuration circuitry 1404 and/or external hardware (e.g., external hardware circuitry) 1406. For example, the configuration circuitry 1404 may implement interface circuitry that may obtain machine readable instructions to configure the FPGA circuitry 1400, or portion(s) thereof. In some such examples, the configuration circuitry 1404 may obtain the machine readable instructions from a user, a machine (e.g., hardware circuitry (e.g., programmed or dedicated circuitry) that may implement an Artificial Intelligence/Machine Learning (AI/ML) model to generate the instructions), etc. In some examples, the external hardware 1406 may implement the microprocessor 1300 of FIG. 13. In some examples, the external hardware 1406 may implement the network interface circuitry 104 of FIG. 1 and/or the network interface circuitry 700 of FIG. 7. The FPGA circuitry 1400 also includes an array of example logic gate circuitry 1408, a plurality of example configurable interconnections 1410, and example storage circuitry 1412. The logic gate circuitry 1408 and interconnections 1410 are configurable to instantiate one or more operations that may correspond to at least some of the machine readable instructions and/or operations of FIGS. 9-11 and/or other desired operations. The logic gate circuitry 1408 shown in FIG. 14 is fabricated in groups or blocks. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1408 to enable configuration of the electrical structures and/or the logic gates to form circuits to perform desired operations. The logic gate circuitry 1408 may include other electrical structures such as look-up tables (LUTs), registers (e.g., flip-flops or latches), multiplexers, etc.

The interconnections 1410 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1408 to program desired logic circuits.

The storage circuitry 1412 of the illustrated example is structured to store result(s) of the one or more of the operations performed by corresponding logic gates. The storage circuitry 1412 may be implemented by registers or the like. In the illustrated example, the storage circuitry 1412 is distributed amongst the logic gate circuitry 1408 to facilitate access and increase execution speed.

The example FPGA circuitry 1400 of FIG. 14 also includes example Dedicated Operations Circuitry 1414. In this example, the Dedicated Operations Circuitry 1414 includes special purpose circuitry 1416 that may be invoked to implement commonly used functions to avoid the need to program those functions in the field. Examples of such special purpose circuitry 1416 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1400 may also include example general purpose programmable circuitry 1418 such as an example CPU 1420 and/or an example DSP 1422. Other general purpose programmable circuitry 1418 may additionally or alternatively be present such as a GPU, an XPU, etc., that can be programmed to perform other operations.

Although FIGS. 13 and 14 illustrate two example implementations of the processor circuitry 1212 of FIG. 12, many other approaches are contemplated. For example, as mentioned above, modern FPGA circuitry may include an on-board CPU, such as one or more of the example CPU 1420 of FIG. 14. Therefore, the processor circuitry 1212 of FIG. 12 may additionally be implemented by combining the example microprocessor 1300 of FIG. 13 and the example FPGA circuitry 1400 of FIG. 14. In some such hybrid examples, a first portion of the machine readable instructions and/or operations represented by the flowcharts of FIGS. 9-11 may be executed by one or more of the cores 1302 of FIG. 13 and a second portion of the machine readable instructions and/or operations represented by the flowcharts of FIGS. 9-11 may be executed by the FPGA circuitry 1400 of FIG. 14.

In some examples, the processor circuitry 1212 of FIG. 12 may be in one or more packages. For example, the processor circuitry 1300 of FIG. 13 and/or the FPGA circuitry 1400 of FIG. 14 may be in one or more packages. In some examples, an XPU may be implemented by the processor circuitry 1212 of FIG. 12, which may be in one or more packages. For example, the XPU may include a CPU in one package, a DSP in another package, a GPU in yet another package, and an FPGA in still yet another package.

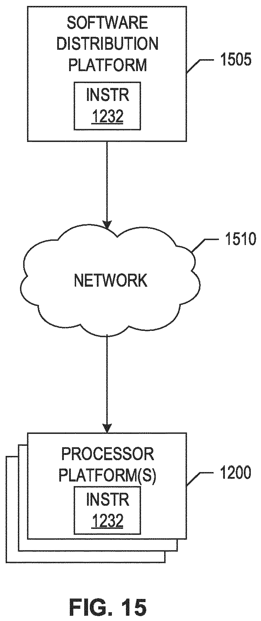

A block diagram illustrating an example software distribution platform 1505 to distribute software such as the example machine readable instructions 1232 of FIG. 12 to hardware devices owned and/or operated by third parties is illustrated in FIG. 15. The example software distribution platform 1505 may be implemented by any computer server, data facility, cloud service, etc., capable of storing and transmitting software to other computing devices. The third parties may be customers of the entity owning and/or operating the software distribution platform 1505. For example, the entity that owns and/or operates the software distribution platform 1505 may be a developer, a seller, and/or a licensor of software such as the example machine readable instructions 1232 of FIG. 12. The third parties may be consumers, users, retailers, OEMs, etc., who purchase and/or license the software for use and/or re-sale and/or sub-licensing. In the illustrated example, the software distribution platform 1505 includes one or more servers and one or more storage devices. The storage devices store the machine readable instructions 1232, which may correspond to the example machine readable instructions and/or operations 900, 1000, 1100 of FIGS. 9-11, as described above. The one or more servers of the example software distribution platform 1505 are in communication with a network 1510, which may correspond to any one or more of the Internet and/or any of the example networks 126, 1226 described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 1232 from the software distribution platform 1505. For example, the software, which may correspond to the example machine readable instructions and/or operations 900, 1000, 1100 of FIGS. 9-11, may be downloaded to the example processor platform 1200, which is to execute the machine readable instructions 1232 to implement the network interface circuitry 104 of FIG. 1 and/or the network interface circuitry 700 of FIG. 7. In some examples, one or more servers of the software distribution platform 1505 periodically offer, transmit, and/or force updates to the software (e.g., the example machine readable instructions and/or operations 1232 of FIG. 12) to ensure improvements, patches, updates, etc., are distributed and applied to the software at the end user devices.

From the foregoing, it will be appreciated that example systems, methods, apparatus, and articles of manufacture have been disclosed for deterministic low latency packet forwarding for daisy chaining of network devices. The example systems, methods, apparatus, and articles of manufacture may forward packets within network interface circuitry by including a local memory mapped buffer and packet forwarding engine (PFE) circuitry to implement the forwarding of the packets. The example systems, methods, apparatus, and articles of manufacture may reduce and/or otherwise eliminate application, driver, and/or kernel involvement of data packet forwarding to increase determinism and bound low packet latencies for use in time sensitive networking applications.

The example systems, methods, apparatus, and articles of manufacture implement low latency cut-through packet forwarding using the local memory mapped buffer and the PFE circuitry housed and/or otherwise disposed between two or more instances of network interface circuitry and, thus, reduce and/or otherwise eliminate the need for external switch component(s). Advantageously, the PFE circuitry may intercept the packets to be routed from ingress port(s) to egress port(s) and store the packets in the local memory mapped buffer and, thus, substantially reduce the latency. Advantageously, the packets to be forwarded may be filtered using one or more filtering rules by receive parser circuitry, which, in turn, may route the packets to the local memory mapped buffer by fabric circuitry. Advantageously, in some examples, the PFE circuitry, instead of application software, may manage descriptor ring formation and data buffer pointers to reduce and/or otherwise eliminate latencies incurred by application, driver, and/or kernel software and/or firmware. Advantageously, gate control lists associated with gate control list circuitry may be improved to cause packets to be transmitted when available in the local memory mapped buffer to provide beneficial cut-through functionality. The disclosed systems, methods, apparatus, and articles of manufacture improve the efficiency of using a computing device by reducing latencies associated with packet forwarding. The disclosed systems, methods, apparatus, and articles of manufacture are accordingly directed to one or more improvement(s) in the operation of a machine such as a computer or other electronic and/or mechanical device.

Example methods, apparatus, systems, and articles of manufacture for deterministic low latency packet forwarding for daisy chaining of network devices are disclosed herein. Further examples and combinations thereof include the following:

Example 1 includes an apparatus to reduce communication latency, the apparatus comprising fabric circuitry, first data interface circuitry and second data interface circuitry coupled to the fabric circuitry, the first data interface circuitry to, in response to a receipt of a data packet, identify the data packet to be transmitted to third data interface circuitry, a data forwarding buffer, and packet forwarding engine circuitry coupled to the data forwarding buffer and the fabric circuitry, the packet forwarding engine circuitry to store the data packet in the data forwarding buffer, and instruct the second data interface circuitry to transmit the data packet from the data forwarding buffer to the third data interface circuitry.

In Example 2, the subject matter of Example 1 can optionally include bridge circuitry coupled to the fabric circuitry, and in response to an identification that the data packet is to be provided to a host application associated with the first data interface circuitry the first data interface circuitry is to provide the data packet to the fabric circuitry, the fabric circuitry is to deliver the data packet to the bridge circuitry, and the bridge circuitry is to store the data packet in memory to be coupled to the bridge circuitry, the host application to access the data packet from the memory.

In Example 3, the subject matter of Examples 1-2 can optionally include that the first data interface circuitry includes media access control (MAC) circuitry to receive the data packet, multiplexer circuitry coupled to the MAC circuitry, a queue buffer coupled to the multiplexer circuitry, parser circuitry coupled to the MAC circuitry and the multiplexer circuitry, the parser circuitry to identify the data packet to be transmitted to the third data interface circuitry based on a header of the data packet, and instruct the multiplexer circuitry to provide the data packet to the queue buffer.

In Example 4, the subject matter of Examples 1-3 can optionally include that the first data interface circuitry includes direct memory access (DMA) engine circuitry coupled to the queue buffer, the DMA engine circuitry to receive the data packet from the queue buffer, and primary fabric interface circuitry coupled to the DMA engine circuitry, the primary fabric interface circuitry to transmit the data packet from the DMA engine to the fabric circuitry.

In Example 5, the subject matter of Examples 1-4 can optionally include that the fabric circuitry includes a first primary port coupled to the first data interface circuitry, the first primary port to obtain the data packet from the first data interface circuitry, a first secondary port coupled to the first primary port and the packet forwarding engine circuitry, the first secondary port to provide the data packet to the packet forwarding engine circuitry, a second secondary port, a second primary port coupled to the second secondary port and the packet forwarding engine circuitry, the second primary port to instruct the second data interface circuitry by the second secondary port to retrieve the data packet from the data forwarding buffer, and a third primary port coupled to the second primary port and the second data interface circuitry, the third primary port to provide the data packet from the data forwarding buffer to the second data interface circuitry.

In Example 6, the subject matter of Examples 1-5 can optionally include that the second data interface circuitry includes primary fabric interface circuitry coupled to the fabric circuitry, the primary fabric interface circuitry to retrieve the data packet from the data forwarding buffer by the fabric circuitry, direct memory access (DMA) engine circuitry coupled to the primary fabric interface circuitry, the DMA engine circuitry to obtain the data packet from the primary fabric interface circuitry, a queue buffer coupled to the DMA engine circuitry, the queue buffer to receive the data packet from the DMA engine circuitry, multiplexer circuitry coupled to the queue buffer, the multiplexer circuitry to receive the data packet from the queue buffer, and media access control (MAC) circuitry coupled to the multiplexer circuitry, the MAC circuitry to receive the data packet from the multiplexer circuitry, and transmit the data packet to the third data interface circuitry by a network.

In Example 7, the subject matter of Examples 1-6 can optionally include a daisy chain mode register, and wherein in response to a first value of the daisy chain mode register to identify that the data packet is to be transmitted to the third data interface circuitry, the first data interface circuitry is to provide the data packet from a queue buffer of the first data interface circuitry to the packet forwarding engine circuitry by the fabric circuitry, and in response to a second value of the daisy chain mode register to identify that the data packet is to be accessed by a host application associated with the first data interface circuitry, the first data interface circuitry is to provide the data packet to memory by the fabric circuitry, the memory different from the data forwarding buffer.

Example 8 includes an apparatus to reduce communication latency, the apparatus comprising means for transmitting a data packet, means for receiving the data packet, the means for receiving to identify the data packet to be forwarded to a network device by the means for transmitting, means for storing the data packet, and means for forwarding the data packet from the means for receiving to the means for transmitting, the means for forwarding coupled to the means for storing, the means for forwarding to store the data packet in means for storing, and instruct the means for transmitting to transmit the data packet from the means for storing to the network device.

In Example 9, the subject matter of Example 8 can optionally include that the means for storing is first means for storing, and further including means for bridging circuitry and means for interfacing with circuitry, and in response to an identification that the data packet is to be provided to a host application associated with the means for receiving the means for receiving is to provide the data packet to the means for interfacing, the means for interfacing is to deliver the data packet to the means for bridging, and the means for bridging is to transmit the data packet to second means for storing, a host application to access the data packet from the second means for storing.

In Example 10, the subject matter of Examples 8-9 can optionally include that the means for storing is first means for storing, and the means for receiving includes means for parsing the data packet, the means for parsing is to identify the data packet to be transmitted to the network device based on a header of the data packet, and instruct means for selecting to store the data packet in second means for storing.

In Example 11, the subject matter of Examples 8-10 can optionally include that the means for receiving includes means for accessing memory coupled to the second means for storing, the means for accessing to receive the data packet from the second means for storing, and means for interfacing with a data fabric coupled to the means for accessing, the means for interfacing with circuitry to transmit the data packet from the means for accessing to the means for forwarding.

In Example 12, the subject matter of Examples 8-11 can optionally include means for interfacing with circuitry, the means for interfacing with circuitry including a first primary port coupled to the means for receiving, the first primary port to obtain the data packet from the means for receiving, a first secondary port coupled to the first primary port and the means for forwarding, the first secondary port to provide the data packet to the means for forwarding, a second secondary port, a second primary port coupled to the second secondary port and the means for forwarding, the second primary port to instruct the means for transmitting by the second secondary port to retrieve the data packet from the means for storing, and a third primary port coupled to the second primary port and the means for transmitting, the third primary port to provide the data packet from the means for storing to the means for transmitting.

In Example 13, the subject matter of Examples 8-12 can optionally include that the means for storing is first means for storing, and the means for transmitting includes means for interfacing with a data fabric, the means for interfacing with the data fabric to retrieve the data packet from the first means for storing, means for accessing memory coupled to the means for interfacing with the data fabric, the means for accessing to obtain the data packet from the means for interfacing with the data fabric, second means for storing coupled to the means for accessing, the second means for storing to receive the data packet from the means for accessing, means for selecting coupled to the second means for storing, the means for selecting to receive the data packet from the second means for storing, and means for controlling, the means for controlling coupled to the means for selecting, the means for controlling to receive the data packet from the means for selecting, and transmit the data packet to the network device by a network.

In Example 14, the subject matter of Examples 8-13 can optionally include that the means for storing is first means for storing, and further including second means for storing, and wherein in response to a first value stored by the second means for storing to identify that the data packet is to be transmitted to the network device, the means for receiving is to provide the data packet from third means for storing included in the means for receiving to the means for forwarding, and in response to a second value stored by the second means for storing to identify that the data packet is to be accessed by a host application associated with the means for receiving, the means for receiving is to provide the data packet to fourth means for storing, the fourth means for storing different from the first means for storing.

Example 15 includes at least one non-transitory computer readable medium comprising instructions that, when executed, cause processor circuitry to at least in response to a receipt of a data packet at first data interface circuitry of a first network device, identify the data packet to be transmitted to a second network device, the first data interface circuitry in a packet forwarding mode, store the data packet in a data forwarding buffer of the first data interface circuitry, and transmit, with second data interface circuitry, the data packet from the data forwarding buffer to the second network device.

In Example 16, the subject matter of Example 15 can optionally include that the instructions, when executed, cause the processor circuitry to generate a receive descriptor ring to be stored in the data forwarding buffer before the data packet is received, the receive descriptor ring including a first receive descriptor, increment a receive tail pointer stored in direct memory access (DMA) local cache, and in response to a prefetch of the first receive descriptor, store the first receive descriptor in the DMA local cache.

In Example 17, the subject matter of Examples 15-16 can optionally include that the instructions, when executed, cause the processor circuitry to generate a transmit descriptor ring to be stored in the data forwarding buffer before the data packet is received, the transmit descriptor ring including a first transmit descriptor, update a transmit tail pointer in direct memory access (DMA) local cache, and in response to a prefetch of the first transmit descriptor, storing the first transmit descriptor in the DMA local cache.

In Example 18, the subject matter of Examples 15-17 can optionally include that the instructions, when executed, cause the processor circuitry to, in response to identifying that the data packet is to be provided to a host application associated with the first data interface circuitry provide the data packet to fabric circuitry coupled to the first data interface circuitry, deliver the data packet to bridge circuitry coupled to the fabric circuitry, and store the data packet in memory coupled to the bridge circuitry, the host application to access the data packet from the memory.

In Example 19, the subject matter of Examples 15-18 can optionally include that the instructions, when executed, cause the processor circuitry to identify the data packet to be transmitted to the second network device based on at least one of an Internet Protocol (IP) address or a media access control (MAC) address in a header of the data packet, the data packet to be stored in the data forwarding buffer based on the at least one of the IP address or the MAC address.

In Example 20, the subject matter of Examples 15-19 can optionally include that the instructions, when executed, cause the processor circuitry to identify a first value of a register in the first data interface circuitry, and in response to a determination that the first value identifies that the data packet is to be transmitted to the second network device, store the data packet in the data forwarding buffer.

In Example 21, the subject matter of Examples 15-20 can optionally include that the instructions, when executed, cause the processor circuitry to identify a first value of a register in the first data interface circuitry, and in response to a determination that the first value identifies that the data packet is to be accessed by a host application associated with the first data interface circuitry, store the data packet in memory different from the data forwarding buffer.

Example 22 includes a method to reduce communication latency, the method comprising in response to receiving a data packet at first data interface circuitry of a first network device, identifying the data packet to be transmitted to a second network device, the first data interface circuitry in a packet forwarding mode, storing the data packet in a data forwarding buffer of the first data interface circuitry, and transmitting, with second data interface circuitry, the data packet from the data forwarding buffer to the second network device.

In Example 23, the subject matter of Example 22 can optionally include generating a receive descriptor ring to be stored in the data forwarding buffer before the data packet is received, the receive descriptor ring including a first receive descriptor, advancing a receive tail pointer stored in direct memory access (DMA) local cache, and in response to prefetching the first receive descriptor, storing the first receive descriptor in the DMA local cache.

In Example 24, the subject matter of Examples 22-23 can optionally include generating a transmit descriptor ring to be stored in the data forwarding buffer before the data packet is received, the transmit descriptor ring including a first transmit descriptor, advancing a transmit tail pointer in direct memory access (DMA) local cache, and in response to prefetching the first transmit descriptor, store the first transmit descriptor in the DMA local cache.

In Example 25, the subject matter of Examples 22-24 can optionally include, in response to identifying that the data packet is to be provided to a host application associated with the first data interface circuitry providing the data packet to fabric circuitry coupled to the first data interface circuitry, delivering the data packet to bridge circuitry coupled to the fabric circuitry, and storing the data packet in memory coupled to the bridge circuitry, the host application to access the data packet from the memory.

In Example 26, the subject matter of Examples 22-25 can optionally include identifying the data packet to be transmitted to the second network device based on at least one of an Internet Protocol (IP) address or a media access control (MAC) address in a header of the data packet, the data packet to be stored in the data forwarding buffer based on the at least one of the IP address or the MAC address.

In Example 27, the subject matter of Examples 22-26 can optionally include identifying a first value of a register in the first data interface circuitry, and in response to a determination that the first value identifies that the data packet is to be transmitted to the second network device, storing the data packet in the data forwarding buffer.

In Example 28, the subject matter of Examples 22-27 can optionally include identifying a first value of a register in the first data interface circuitry, and in response to a determination that the first value identifies that the data packet is to be accessed by a host application associated with the first data interface circuitry, storing the data packet in memory different from the data forwarding buffer.

Example 29 is an apparatus comprising processor circuitry to perform the method of any of Examples 22-27.

Example 30 is an apparatus comprising one or more edge gateways to perform the method of any of Examples 22-27.

Example 31 is an apparatus comprising one or more edge switches to perform the method of any of Examples 22-27.

Example 32 is an apparatus comprising at least one of one or more edge gateways or one or more edge switches to perform the method of any of Examples 22-27.

Example 33 is an apparatus comprising network interface circuitry to perform the method of any of Examples 22-27.

Example 34 is an apparatus comprising field programmable gate array (FPGA) circuitry to perform the method of any of Examples 22-27.

Example 35 is at least one computer readable medium comprising instructions to perform the method of any of Examples 22-27.

Although certain example systems, methods, apparatus, and articles of manufacture have been disclosed herein, the scope of coverage of this patent is not limited thereto. On the contrary, this patent covers all systems, methods, apparatus, and articles of manufacture fairly falling within the scope of the claims of this patent.

The following claims are hereby incorporated into this Detailed Description by this reference, with each claim standing on its own as a separate embodiment of the present disclosure.

## Claims

1. An apparatus to reduce communication latency, the apparatus comprising:
fabric circuitry;
first data interface circuitry and second data interface circuitry coupled to the fabric circuitry, the first data interface circuitry to, in response to a receipt of a data packet, identify the data packet to be transmitted to third data interface circuitry;
a data forwarding buffer; and
packet forwarding engine circuitry coupled to the data forwarding buffer and the fabric circuitry, the packet forwarding engine circuitry to:
store the data packet in the data forwarding buffer; and
instruct the second data interface circuitry to transmit the data packet from the data forwarding buffer to the third data interface circuitry.

2. The apparatus of claim 1, further including bridge circuitry coupled to the fabric circuitry, and in response to an identification that the data packet is to be provided to a host application associated with the first data interface circuitry:
the first data interface circuitry is to provide the data packet to the fabric circuitry;
the fabric circuitry is to deliver the data packet to the bridge circuitry; and
the bridge circuitry is to store the data packet in memory to be coupled to the bridge circuitry, the host application to access the data packet from the memory.

3. The apparatus of any one of claims 1 or 2, wherein the first data interface circuitry includes:
media access control (MAC) circuitry to receive the data packet;
multiplexer circuitry coupled to the MAC circuitry;
a queue buffer coupled to the multiplexer circuitry;
parser circuitry coupled to the MAC circuitry and the multiplexer circuitry, the parser circuitry to:
identify the data packet to be transmitted to the third data interface circuitry based on a header of the data packet; and
instruct the multiplexer circuitry to provide the data packet to the queue buffer.

4. The apparatus of claim 3, wherein the first data interface circuitry includes:
direct memory access (DMA) engine circuitry coupled to the queue buffer, the DMA engine circuitry to receive the data packet from the queue buffer; and
primary fabric interface circuitry coupled to the DMA engine circuitry, the primary fabric interface circuitry to transmit the data packet from the DMA engine to the fabric circuitry.

5. The apparatus of any of claims 1 or 4, wherein the fabric circuitry includes:
a first primary port coupled to the first data interface circuitry, the first primary port to obtain the data packet from the first data interface circuitry;
a first secondary port coupled to the first primary port and the packet forwarding engine circuitry, the first secondary port to provide the data packet to the packet forwarding engine circuitry;
a second secondary port;
a second primary port coupled to the second secondary port and the packet forwarding engine circuitry, the second primary port to instruct the second data interface circuitry by the second secondary port to retrieve the data packet from the data forwarding buffer; and
a third primary port coupled to the second primary port and the second data interface circuitry, the third primary port to provide the data packet from the data forwarding buffer to the second data interface circuitry.

6. The apparatus of any of claims 1 or 2, wherein the second data interface circuitry includes:
primary fabric interface circuitry coupled to the fabric circuitry, the primary fabric interface circuitry to retrieve the data packet from the data forwarding buffer by the fabric circuitry;
direct memory access (DMA) engine circuitry coupled to the primary fabric interface circuitry, the DMA engine circuitry to obtain the data packet from the primary fabric interface circuitry;
a queue buffer coupled to the DMA engine circuitry, the queue buffer to receive the data packet from the DMA engine circuitry;
multiplexer circuitry coupled to the queue buffer, the multiplexer circuitry to receive the data packet from the queue buffer; and
media access control (MAC) circuitry coupled to the multiplexer circuitry, the MAC circuitry to:
receive the data packet from the multiplexer circuitry; and
transmit the data packet to the third data interface circuitry by a network.

7. The apparatus of any one of claims 1 or 2, further including a daisy chain mode register, and wherein:
in response to a first value of the daisy chain mode register to identify that the data packet is to be transmitted to the third data interface circuitry, the first data interface circuitry is to provide the data packet from a queue buffer of the first data interface circuitry to the packet forwarding engine circuitry by the fabric circuitry; and
in response to a second value of the daisy chain mode register to identify that the data packet is to be accessed by a host application associated with the first data interface circuitry, the first data interface circuitry is to provide the data packet to memory by the fabric circuitry, the memory different from the data forwarding buffer.

8. A method to reduce communication latency, the method comprising:
in response to receiving a data packet at first data interface circuitry of a first network device, identifying the data packet to be transmitted to a second network device, the first data interface circuitry in a packet forwarding mode;
storing the data packet in a data forwarding buffer of the first data interface circuitry; and
transmitting, with second data interface circuitry, the data packet from the data forwarding buffer to the second network device.

9. The method of claim 8, further including:
generating a receive descriptor ring to be stored in the data forwarding buffer before the data packet is received, the receive descriptor ring including a first receive descriptor;
advancing a receive tail pointer stored in direct memory access (DMA) local cache; and
in response to prefetching the first receive descriptor, storing the first receive descriptor in the DMA local cache.

10. The method of any one of claims 8 or 9, further including:
generating a transmit descriptor ring to be stored in the data forwarding buffer before the data packet is received, the transmit descriptor ring including a first transmit descriptor;
advancing a transmit tail pointer in direct memory access (DMA) local cache; and
in response to prefetching the first transmit descriptor, store the first transmit descriptor in the DMA local cache.

11. The method of any one of claims 8-10, further including, in response to identifying that the data packet is to be provided to a host application associated with the first data interface circuitry:
providing the data packet to fabric circuitry coupled to the first data interface circuitry;
delivering the data packet to bridge circuitry coupled to the fabric circuitry; and
storing the data packet in memory coupled to the bridge circuitry, the host application to access the data packet from the memory.

12. The method of any one of claims 8-11, further including identifying the data packet to be transmitted to the second network device based on at least one of an Internet Protocol (IP) address or a media access control (MAC) address in a header of the data packet, the data packet to be stored in the data forwarding buffer based on the at least one of the IP address or the MAC address.

13. The method of any one of claims 8-12, further including:
identifying a first value of a register in the first data interface circuitry; and
in response to a determination that the first value identifies that the data packet is to be transmitted to the second network device, storing the data packet in the data forwarding buffer.

14. The method of claim 8, further including:
identifying a first value of a register in the first data interface circuitry; and
in response to a determination that the first value identifies that the data packet is to be accessed by a host application associated with the first data interface circuitry, storing the data packet in memory different from the data forwarding buffer.

15. At least one machine readable storage medium including machine readable instructions that, when executed, realize an apparatus or implement a method as claimed in any preceding claim.
